# EUROPEAN PATENT APPLICATION

(11) **EP 4 459 946 A1**
(43) Date of publication of application: **06.11.2024**
(21) Application number: 23746462.3
(22) Date of filing: 29.01.2023
(51) Int. Cl.: H04L 45/02, H04L 45/00

(54) **ROUTE ADVERTISEMENT METHOD, NETWORK DEVICE, AND SYSTEM**

(30) Priority: 30.01.2022 CN 202210114169
(71) Applicant: Huawei Technologies Co., Ltd., Shenzhen, Guangdong 518129 (CN)
(72) Inventor: ZHU, Tong, Shenzhen, Guangdong 518129 (CN); REN, Huajun, Shenzhen, Guangdong 518129 (CN)
(74) Representative: MERH-IP Matias Erny Reichl Hoffmann Patentanwälte PartG mbB
(86) International application number: PCT/CN2023/073732
(87) International publication number: WO 2023/143585

(57) **Abstract**

Embodiments of this application provide a route advertisement method, a network device, and a system. A first network device receives a route advertisement packet from a second network device, where the route advertisement packet includes a common field and a variable field, the common field carries a common part of N segment routing over internet protocol version 6 SRv6 segment identifiers SIDs, the variable field carries a variable part of a first SRv6 SID in the N SRv6 SIDs, the N SRv6 SIDs correspond to a first prefix, and N is a positive integer greater than or equal to 2. The first network device obtains the N SRv6 SIDs based on the common part and the variable part of the first SRv6 SID. The first network device generates a first route, where the first route includes the first prefix and the N SRv6 SIDs. According to the method, a length of the route advertisement packet is reduced, a bandwidth occupied by the route advertisement packet is reduced, and route advertisement efficiency is improved.

## Description

This application claims priority to Chinese Patent Application No. 202210114169.4, filed on January 30, 2022 and entitled "ROUTE ADVERTISEMENT METHOD, NETWORK DEVICE, AND SYSTEM", which is incorporated herein by reference in its entirety.

### TECHNICAL FIELD

This application relates to the field of communication technologies, and in particular, to a route advertisement method, a network device, and a system.

### BACKGROUND

Segment routing over internet protocol version 6 (Segment Routing over IPv6, SRv6) is a segment routing (segment routing, SR) technology that is based on an internet protocol version 6 (Internet Protocol version 6, IPv6) forwarding plane, and is increasingly applied to various services carried through the border gateway protocol (Border Gateway Protocol, BGP) in combination with advantages of source routes of segment routing and simplicity and extensibility of IPv6, for example, a layer 3 virtual private network (Layer 3 virtual private network, L3VPN), an ethernet virtual private network (Ethernet Virtual Private Network, EVPN) virtual private local area network service (virtual private LAN service, VPLS), and an EVPN virtual private wire service (virtual private wire service, VPWS).

To implement BGP-based SRv6 information advertisement, a transmitter provider edge (provider edge, PE) advertises an SRv6 segment identifier (segment identifier, SID) of the transmitter provider edge to a receiver PE via a BGP update message. When the receiver PE forwards, to the transmitter PE, a packet received from a customer edge (customer edge, CE), the forwarded packet carries the SRv6 SID in the BGP update message. When receiving the packet, the transmitter PE performs, based on the SRv6 SID carried in the packet, an endpoint operation associated with the SRv6 SID.

In a scenario in which the transmitter PE allocates an SRv6 SID to each prefix (prefix), for some services carried using BGP, for example, the EVPN VPWS, the transmitter PE allocates an SRv6 SID based on each prefix. In this case, the transmitter PE allocates different SRv6 SIDs to different prefixes. Each BGP update message may carry a plurality of prefixes corresponding to a same SRv6 SID. If a plurality of prefixes correspond to different SRv6 SIDs, advertisement needs to be separately performed via a plurality of different BGP update messages. Therefore, for the EVPN VPWS, because a plurality of prefixes corresponding to the transmitter PE correspond to different SRv6 SIDs, advertisement is separately performed via a plurality of BGP update messages. As a result, route advertisement efficiency is low and a route convergence speed is slow. Therefore, there is a need for an efficient route advertisement method, and internet engineering task force (Internet Engineering Task Force, IETF) draft draft-ietf-bess-srv6-services provides a route advertisement method to resolve the foregoing problem.

However, for a scenario in which the transmitter PE allocates N (N is a positive integer greater than or equal to 2) SRv6 SIDs to each prefix, for example, two SRv6 SIDs, the solution in the draft is no longer applicable. Consequently, route advertisement efficiency is low and a route convergence speed is slow in the scenario.

### SUMMARY

In view of this, this application provides a route advertisement method, a network device, and a system, to improve route advertisement efficiency.

According to a first aspect, this application provides a route advertisement method. The method includes: A first network device receives a route advertisement packet from a second network device, where the route advertisement packet includes a common field and a variable field, the common field carries a common part of N SRv6 SIDs, the variable field carries a variable part of a first SRv6 SID in the N SRv6 SIDs, the N SRv6 SIDs correspond to a first prefix, and N is a positive integer greater than or equal to 2. The first network device obtains the N SRv6 SIDs based on the common part and the variable part of the first SRv6 SID. The first network device generates a first route, where the first route includes the first prefix and the N SRv6 SIDs.

Based on the solution provided in this application, in a route advertisement process, the common part of the N SRv6 SIDs corresponding to the first prefix is carried in one common field, and the first network device obtains the N SRv6 SIDs based on the common part of the N SRv6 SIDs in the common field and the variable part of the first SRv6 SID, and generates the first route, where the first route includes the first prefix and the N SRv6 SIDs. Because the common part of the N SRv6 SIDs does not need to be separately carried in different fields of the route advertisement packet, a length of the route advertisement packet is reduced, a bandwidth occupied by the route advertisement packet is reduced, and route advertisement efficiency is improved.

In a possible implementation, the N SRv6 SIDs further correspond to a second prefix, and the method further includes: The first network device generates a second route, where the second route includes the second prefix and the N SRv6 SIDs.

Based on the solution provided in this application, when the N SRv6 SIDs further correspond to the second prefix, because the common part of the N SRv6 SIDs is independently carried in the common field in the route advertisement packet, routes of a plurality of route prefixes may be advertised via one route advertisement packet instead of a plurality of packets respectively. The first network device may separately generate the first route and the second route based on one route advertisement packet, where the second route includes the second prefix and the N SRv6 SIDs, to further reduce the bandwidth occupied by the route advertisement packet, improve the route advertisement efficiency, and increase a route convergence speed.

In a possible implementation, the route advertisement packet further includes N-1 variable fields, the N-1 variable fields respectively carry variable parts of N-1 SRv6 SIDs, the N-1 SRv6 SIDs are SRv6 SIDs other than the first SRv6 SID in the N SRv6 SIDs, and that the first network device obtains the N SRv6 SIDs based on the common part and the variable part of the first SRv6 SID includes:

The first network device obtains the N SRv6 SIDs based on the common part, the variable part of the first SRv6 SID, and the variable parts of the N-1 SRv6 SIDs.

Based on the solution provided in this application, the route advertisement packet includes one common field that carries the common part of the N SRv6 SIDs, and further includes the N variable fields that respectively carry the variable parts of the N SRv6 SIDs. Because each of the N SRv6 SIDs includes the common part and the variable part, the first network device may separately obtain each of the N SRv6 SIDs based on the common part and the variable part of each SRv6 SID in the advertisement packet. Therefore, in the solution provided in this application, the N SRv6 SIDs may be obtained based on the common field and the variable part of each SRv6 SID in the route advertisement packet, and the common part and the variable part of each of the N SRv6 SIDs do not need to be separately obtained based on different fields, to improve efficiency of processing the route advertisement packet.

In a possible implementation, that the first network device obtains the N SRv6 SIDs based on the common part, the variable part of the first SRv6 SID, and the variable parts of the N-1 SRv6 SIDs includes:

The first network device obtains the first SRv6 SID based on the common part and the variable part of the first SRv6 SID. The first network device obtains the N-1 SRv6 SIDs based on the common part and the variable parts of the N-1 SRv6 SIDs.

In a possible implementation, the route advertisement packet further includes an offset value and a length value, the length value indicates a length of each of the variable parts of the N SRv6 SIDs, and the offset value indicates an offset location of each of the variable parts of the N SRv6 SIDs in an SRv6 SID.

In a possible implementation, the route advertisement packet further includes indication information, the indication information indicates a quantity of the N SRv6 SIDs, and that the first network device obtains the N SRv6 SIDs based on the common part and the variable part of the first SRv6 SID includes:

The first network device obtains the N SRv6 SIDs based on the common part, the variable part of the first SRv6 SID, and the indication information.

In a possible implementation, that the first network device obtains the N SRv6 SIDs based on the common part, the variable part of the first SRv6 SID, and the indication information includes:

The first network device obtains the first SRv6 SID based on the common part and the variable part of the first SRv6 SID. The first network device obtains N-1 SRv6 SIDs based on the first SRv6 SID and the indication information, where the N-1 SRv6 SIDs are SRv6 SIDs other than the first SRv6 SID in the N SRv6 SIDs.

Based on the solution provided in this application, the route advertisement packet includes the common part of the N SRv6 SIDs, the variable part of the first SRv6 SID, and the indication information indicating the quantity of the N SRv6 SIDs. Because each of the N SRv6 SIDs includes the common part and the variable part, the first network device may obtain the first SRv6 SID based on the common part and the variable part of the first SRv6 SID. The first network device may obtain a value of N-1 based on the indication information. Then, the first network device sequentially obtains the N-1 SRv6 SIDs based on the first SRv6 SID and a specific relationship between the N SRv6 SIDs, where the specific relationship includes that the N SRv6 SIDs are an arithmetic progression or the N SRv6 SIDs are a non-arithmetic progression. Therefore, in the solution provided in this application, the N SRv6 SIDs may be obtained based on a fixed field in the route advertisement packet, and the N SRv6 SIDs do not need to be respectively obtained based on different fields, to improve efficiency of processing the route advertisement packet.

In a possible implementation, the N SRv6 SIDs are an arithmetic progression.

Based on the solution provided in this application, the specific relationship between the N SRv6 SIDs satisfies that the N SRv6 SIDs are the arithmetic progression. By default, the route advertisement packet may not carry a common difference of the arithmetic progression. In this case, the common difference of the arithmetic progression is 1 or -1. When the common difference is 1, the first network device separately obtains the N-1 SRv6 SIDs by sequentially adding 1 to the first SRv6 SID. When the common difference is -1, the first network device separately obtains the N-1 SRv6 SIDs by sequentially subtracting 1 from the first SRv6 SID. Therefore, in the solution provided in this application, the N SRv6 SIDs with the common difference of 1 or -1 may be obtained based on the fixed field in the route advertisement packet, and the N SRv6 SIDs do not need to be respectively obtained based on different fields, to improve efficiency of processing the route advertisement packet.

In a possible implementation, the route advertisement packet further includes the common difference of the arithmetic progression, and a difference between each SRv6 SID behind a second SRv6 SID and a previous SRv6 SID in the N SRv6 SIDs is equal to the common difference.

Based on the solution provided in this application, the specific relationship between the N SRv6 SIDs satisfies that the N SRv6 SIDs are the arithmetic progression, and the route advertisement packet further includes the common difference of the arithmetic progression. In this case, the common difference may be any integer. The first network device separately obtains the N-1 SRv6 SIDs by sequentially adding the common difference to the first SRv6 SID. Therefore, in the solution provided in this application, the N SRv6 SIDs with the common difference of any integer may be obtained based on the fixed field in the route advertisement packet, and the N SRv6 SIDs do not need to be respectively obtained based on different fields, to improve efficiency of processing the route advertisement packet.

In a possible implementation, the N SRv6 SIDs are a non-arithmetic progression. In this case, the route advertisement packet further includes a difference between each SRv6 SID behind a second SRv6 SID and a previous SRv6 SID in the N SRv6 SIDs.

Based on the solution provided in this application, the N SRv6 SIDs are the non-arithmetic progression, and the route advertisement packet includes the difference between each SRv6 SID behind the second SRv6 SID and the previous SRv6 SID in the N SRv6 SIDs. The first network device obtains the second SRv6 SID based on the first SRv6 SID and a difference between the second SRv6 SID and the first SRv6 SID, and the first network device obtains a third SRv6 SID based on the second SRv6 SID and a difference between the third SRv6 SID and the second SRv6 SID. By analogy, the first network device may obtain the N-1 SRv6 SIDs other than the first SRv6 SID. Therefore, when the N SRv6 SIDs are the non-arithmetic progression, in the solution provided in this application, the N SRv6 SIDs may be obtained based on the fixed field in the route advertisement packet, and the N SRv6 SIDs do not need to be respectively obtained based on different fields, to improve efficiency of processing the route advertisement packet.

In a possible implementation, the route advertisement packet further includes an offset value and a length value, the length value indicates a length of the variable part of the first SRv6 SID, and the offset value indicates an offset location of the variable part of the first SRv6 SID in the first SRv6 SID.

In a possible implementation, the route advertisement packet includes a first network layer reachability information (Network Layer Reachability Information, NLRI) field, and the first NLRI field includes the N-1 variable fields.

In a possible implementation, the first NLRI field includes the variable field and/or the N-1 variable fields.

In a possible implementation, the route advertisement packet includes a first attach type length value field, and the first attach type length value field carries the indication information.

In a possible implementation, the first attach type length value field includes the indication information and/or N behavior fields, and the N behavior fields respectively carry SRv6 endpoint behavior code values associated with the N SRv6 SIDs.

In a possible implementation, the route advertisement packet includes an SRv6 SID structure type length value field, and the SRv6 SID structure type length value field carries the offset value and the length value.

In a possible implementation, the route advertisement packet includes a second NLRI field, and the second NLRI field includes the variable field.

In a possible implementation, the route advertisement packet includes a second attach type length value field, the second attach type length value field includes N behavior fields, and the N behavior fields respectively carry SRv6 endpoint behavior code values associated with the N SRv6 SIDs.

In a possible implementation, the route advertisement packet includes a BGP update message or a BGP link state protocol advertisement message.

In a possible implementation, the common field is in a prefix SID attribute of the BGP update message.

In a possible implementation, the common field is a SID field of the prefix SID attribute.

In a possible implementation, the common part includes a locator part of an SRv6 SID, and each of the variable parts of the N SRv6 SIDs includes a function part of the SRv6 SID and/or an argument part of the SRv6 SID.

In a possible implementation, the route advertisement packet is used to advertise at least one of the following routes: an EVPN type 1 route, an EVPN type 2 route, an EVPN type 5 route, and a layer 3 virtual private network route.

In a possible implementation, the first SRv6 SID in the N SRv6 SIDs is used by the first network device to forward traffic to the second network device.

In a possible implementation, the first network device forwards traffic to a third network device. When a connection between the third network device and a CE is faulty, the third network device forwards traffic to the second network device via the second SRv6 SID in the N SRv6 SIDs, and the CE is dual-homed to the second network device and the third network device.

According to a second aspect, this application provides a route advertisement method. The method includes: A first network device obtains a route advertisement packet, where the route advertisement packet includes a common field and a variable field, the common field carries a common part of N SRv6 SIDs, the variable field carries a variable part of a first SRv6 SID in the N SRv6 SIDs, the N SRv6 SIDs correspond to a first prefix, and N is a positive integer greater than or equal to 2. The first network device sends the route advertisement packet to a second network device.

Based on the solution provided in this application, in a route advertisement process, the common part of the N SRv6 SIDs corresponding to the first prefix is carried in one common field. Because the common part of the N SRv6 SIDs does not need to be separately carried in different fields of the route advertisement packet, a length of the route advertisement packet is reduced, a bandwidth occupied by the route advertisement packet is reduced, and route advertisement efficiency is improved.

In a possible implementation, the N SRv6 SIDs further correspond to a second prefix.

Based on the solution provided in this application, when the N SRv6 SIDs further correspond to the second prefix, because the common part of the N SRv6 SIDs is independently carried in the common field in the route advertisement packet, routes of a plurality of route prefixes may be advertised via one route advertisement packet instead of a plurality of packets respectively, to further reduce the bandwidth occupied by the route advertisement packet, improve the route advertisement efficiency, and increase a route convergence speed.

In a possible implementation, the route advertisement packet further includes N-1 variable fields, the N-1 variable fields respectively carry variable parts of N-1 SRv6 SIDs, and the N-1 SRv6 SIDs are SRv6 SIDs other than the first SRv6 SID in the N SRv6 SIDs.

In a possible implementation, the route advertisement packet further includes an offset value and a length value, the length value indicates a length of each of the variable parts of the N SRv6 SIDs, and the offset value indicates an offset location of each of the variable parts of the N SRv6 SIDs in an SRv6 SID.

In a possible implementation, the route advertisement packet further includes indication information, and the indication information indicates a quantity of the N SRv6 SIDs.

In a possible implementation, the N SRv6 SIDs are an arithmetic progression.

In a possible implementation, the route advertisement packet further includes the common difference of the arithmetic progression, and a difference between each SRv6 SID behind a second SRv6 SID and a previous SRv6 SID in the N SRv6 SIDs is equal to the common difference.

In a possible implementation, the N SRv6 SIDs are a non-arithmetic progression. In this case, the route advertisement packet further includes a difference between each SRv6 SID behind a second SRv6 SID and a previous SRv6 SID in the N SRv6 SIDs.

In a possible implementation, the route advertisement packet further includes an offset value and a length value, the length value indicates a length of the variable part of the first SRv6 SID, and the offset value indicates an offset location of the variable part of the first SRv6 SID in the first SRv6 SID.

In a possible implementation, the route advertisement packet includes a first NLRI field, and the first NLRI field includes the N-1 variable fields.

In a possible implementation, the first NLRI field includes the variable field and/or the N-1 variable fields.

In a possible implementation, the route advertisement packet includes a first attach type length value field, and the first attach type length value field carries the indication information.

In a possible implementation, the first attach type length value field includes the indication information and/or N behavior fields, and the N behavior fields respectively carry SRv6 endpoint behavior code values associated with the N SRv6 SIDs.

In a possible implementation, the route advertisement packet includes an SRv6 SID structure type length value field, and the SRv6 SID structure type length value field carries the offset value and the length value.

In a possible implementation, the route advertisement packet includes a second NLRI field, and the second NLRI field includes the variable field.

In a possible implementation, the route advertisement packet includes a second attach type length value field, the second attach type length value field includes N behavior fields, and the N behavior fields respectively carry SRv6 endpoint behavior code values associated with the N SRv6 SIDs.

In a possible implementation, the route advertisement packet includes a BGP update message or a BGP link state protocol advertisement message.

In a possible implementation, the common part is carried in a prefix SID attribute of the BGP update message.

In a possible implementation, the common field is a SID field of the prefix SID attribute.

In a possible implementation, the common part includes a locator part of an SRv6 SID, and each of the variable parts of the N SRv6 SIDs includes a function part of the SRv6 SID and/or an argument part of the SRv6 SID.

In a possible implementation, the route advertisement packet is used to advertise at least one of the following routes: an EVPN type 1 route, an EVPN type 2 route, an EVPN type 5 route, and a layer 3 virtual private network route.

In a possible implementation, the first SRv6 SID in the N SRv6 SIDs is used by the second network device to forward traffic to the first network device.

In a possible implementation, the second network device forwards traffic to a third network device. When a connection between the third network device and a CE is faulty, the third network device forwards traffic to the first network device via the second SRv6 SID in the N SRv6 SIDs, and the CE is dual-homed to the first network device and the third network device.

According to a third aspect, this application provides a network device, including a transceiver unit and a processing unit. The transceiver unit is configured to receive a route advertisement packet from a second network device, where the route advertisement packet includes a common field and a variable field, the common field carries a common part of N SRv6 SIDs, the variable field carries a variable part of a first SRv6 SID in the N SRv6 SIDs, the N SRv6 SIDs correspond to a first prefix, and N is a positive integer greater than or equal to 2. The processing unit is configured to obtain the N SRv6 SIDs based on the common part and the variable part of the first SRv6 SID. The processing unit is further configured to generate a first route, where the first route includes the first prefix and the N SRv6 SIDs.

In a possible implementation, the N SRv6 SIDs further correspond to a second prefix, and the processing unit is further configured to generate a second route, where the second route includes the second prefix and the N SRv6 SIDs.

In a possible implementation, the route advertisement packet further includes N-1 variable fields, the N-1 variable fields respectively carry variable parts of N-1 SRv6 SIDs, the N-1 SRv6 SIDs are SRv6 SIDs other than the first SRv6 SID in the N SRv6 SIDs, and the processing unit is specifically configured to obtain the N SRv6 SIDs based on the common part, the variable part of the first SRv6 SID, and the variable parts of the N-1 SRv6 SIDs.

In a possible implementation, the processing unit is specifically configured to:
obtain the first SRv6 SID based on the common part and the variable part of the first SRv6 SID; and
obtain the N-1 SRv6 SIDs based on the common part and the variable parts of the N-1 SRv6 SIDs.

In a possible implementation, the route advertisement packet further includes an offset value and a length value, the length value indicates a length of each of the variable parts of the N SRv6 SIDs, and the offset value indicates an offset location of each of the variable parts of the N SRv6 SIDs in an SRv6 SID.

In a possible implementation, the route advertisement packet further includes indication information, the indication information indicates a quantity of the N SRv6 SIDs, and the processing unit is specifically configured to obtain the N SRv6 SIDs based on the common part, the variable part of the first SRv6 SID, and the indication information.

In a possible implementation, the processing unit is specifically configured to:
obtain the first SRv6 SID based on the common part and the variable part of the first SRv6 SID; and
obtain N-1 SRv6 SIDs based on the first SRv6 SID and the indication information, where the N-1 SRv6 SIDs are SRv6 SIDs other than the first SRv6 SID in the N SRv6 SIDs.

In a possible implementation, the N SRv6 SIDs are an arithmetic progression.

In a possible implementation, the route advertisement packet further includes the common difference of the arithmetic progression, and a difference between each SRv6 SID behind a second SRv6 SID and a previous SRv6 SID in the N SRv6 SIDs is equal to the common difference.

In a possible implementation, the N SRv6 SIDs are a non-arithmetic progression. In this case, the route advertisement packet further includes a difference between each SRv6 SID behind a second SRv6 SID and a previous SRv6 SID in the N SRv6 SIDs.

In a possible implementation, the route advertisement packet further includes an offset value and a length value, the length value indicates a length of the variable part of the first SRv6 SID, and the offset value indicates an offset location of the variable part of the first SRv6 SID in the first SRv6 SID.

In a possible implementation, the route advertisement packet includes a first NLRI field, and the first NLRI field includes the N-1 variable fields.

In a possible implementation, the first NLRI field includes the variable field and/or the N-1 variable fields.

In a possible implementation, the route advertisement packet includes a first attach type length value field, and the first attach type length value field carries the indication information.

In a possible implementation, the first attach type length value field includes the indication information and/or N behavior fields, and the N behavior fields respectively carry SRv6 endpoint behavior code values associated with the N SRv6 SIDs.

In a possible implementation, the route advertisement packet includes an SRv6 SID structure type length value field, and the SRv6 SID structure type length value field carries the offset value and the length value.

In a possible implementation, the route advertisement packet includes a second NLRI field, and the second NLRI field includes the variable field.

In a possible implementation, the route advertisement packet includes a second attach type length value field, the second attach type length value field includes N behavior fields, and the N behavior fields respectively carry SRv6 endpoint behavior code values associated with the N SRv6 SIDs.

In a possible implementation, the route advertisement packet includes a BGP update message or a BGP link state protocol advertisement message.

In a possible implementation, the common field is in a prefix SID attribute of the BGP update message.

In a possible implementation, the common field is a SID field of the prefix SID attribute.

In a possible implementation, the common part includes a locator part of an SRv6 SID, and each of the variable parts of the N SRv6 SIDs includes a function part of the SRv6 SID and/or an argument part of the SRv6 SID.

In a possible implementation, the route advertisement packet is used to advertise at least one of the following routes: an EVPN type 1 route, an EVPN type 2 route, an EVPN type 5 route, and a layer 3 virtual private network route.

In a possible implementation, the first SRv6 SID in the N SRv6 SIDs is used by the first network device to forward traffic to the second network device.

In a possible implementation, the first network device forwards traffic to a third network device. When a connection between the third network device and a CE is faulty, the third network device forwards traffic to the second network device via the second SRv6 SID in the N SRv6 SIDs, and the CE is dual-homed to the second network device and the third network device.

According to a fourth aspect, this application provides a network device, including a transceiver unit and a processing unit. The processing unit is configured to obtain a route advertisement packet, where the route advertisement packet includes a common field and a variable field, the common field carries a common part of N SRv6 SIDs, the variable field carries a variable part of a first SRv6 SID in the N SRv6 SIDs, the N SRv6 SIDs correspond to a first prefix, and N is a positive integer greater than or equal to 2. The transceiver unit is configured to send the route advertisement packet to a second network device.

In a possible implementation, the N SRv6 SIDs further correspond to a second prefix.

In a possible implementation, the route advertisement packet further includes N-1 variable fields, the N-1 variable fields respectively carry variable parts of N-1 SRv6 SIDs, and the N-1 SRv6 SIDs are SRv6 SIDs other than the first SRv6 SID in the N SRv6 SIDs.

In a possible implementation, the route advertisement packet further includes an offset value and a length value, the length value indicates a length of each of the variable parts of the N SRv6 SIDs, and the offset value indicates an offset location of each of the variable parts of the N SRv6 SIDs in an SRv6 SID.

In a possible implementation, the route advertisement packet further includes indication information, and the indication information indicates a quantity of the N SRv6 SIDs.

In a possible implementation, the N SRv6 SIDs are an arithmetic progression.

In a possible implementation, the route advertisement packet further includes the common difference of the arithmetic progression, and a difference between each SRv6 SID behind a second SRv6 SID and a previous SRv6 SID in the N SRv6 SIDs is equal to the common difference.

In a possible implementation, the N SRv6 SIDs are a non-arithmetic progression. In this case, the route advertisement packet further includes a difference between each SRv6 SID behind a second SRv6 SID and a previous SRv6 SID in the N SRv6 SIDs.

In a possible implementation, the route advertisement packet further includes an offset value and a length value, the length value indicates a length of the variable part of the first SRv6 SID, and the offset value indicates an offset location of the variable part of the first SRv6 SID in the first SRv6 SID.

In a possible implementation, the route advertisement packet includes a first NLRI field, and the first NLRI field includes the N-1 variable fields.

In a possible implementation, the first NLRI field includes the variable field and/or the N-1 variable fields.

In a possible implementation, the route advertisement packet includes a first attach type length value field, and the first attach type length value field carries the indication information.

In a possible implementation, the first attach type length value field includes the indication information and/or N behavior fields, and the N behavior fields respectively carry SRv6 endpoint behavior code values associated with the N SRv6 SIDs.

In a possible implementation, the route advertisement packet includes an SRv6 SID structure type length value field, and the SRv6 SID structure type length value field carries the offset value and the length value.

In a possible implementation, the route advertisement packet includes a second NLRI field, and the second NLRI field includes the variable field.

In a possible implementation, the route advertisement packet includes a second attach type length value field, the second attach type length value field includes N behavior fields, and the N behavior fields respectively carry SRv6 endpoint behavior code values associated with the N SRv6 SIDs.

In a possible implementation, the route advertisement packet includes a BGP update message or a BGP link state protocol advertisement message.

In a possible implementation, the common part is carried in a prefix SID attribute of the BGP update message.

In a possible implementation, the common field is a SID field of the prefix SID attribute.

In a possible implementation, the common part includes a locator part of an SRv6 SID, and each of the variable parts of the N SRv6 SIDs includes a function part of the SRv6 SID and/or an argument part of the SRv6 SID.

In a possible implementation, the route advertisement packet is used to advertise at least one of the following routes: an EVPN type 1 route, an EVPN type 2 route, an EVPN type 5 route, and a layer 3 virtual private network route.

In a possible implementation, the first SRv6 SID in the N SRv6 SIDs is used by the second network device to forward traffic to the first network device.

In a possible implementation, the second network device forwards traffic to a third network device. When a connection between the third network device and a CE is faulty, the third network device forwards traffic to the first network device via the second SRv6 SID in the N SRv6 SIDs, and the CE is dual-homed to the first network device and the third network device.

According to a fifth aspect, this application provides a network device. The network device includes a memory and a processor, the memory is configured to store program code, and the processor is configured to run instructions in the program code, so that the network device performs the method according to any one of the foregoing aspects and any possible implementation of any one of the foregoing aspects. For example, when the network device according to the fifth aspect serves as a first network device to perform the method according to the first aspect, the processor executes the instructions, so that the network device is configured to: receive a route advertisement packet from a second network device, where the route advertisement packet includes a common field and a variable field, the common field carries a common part of N SRv6 SIDs, the variable field carries a variable part of a first SRv6 SID in the N SRv6 SIDs, the N SRv6 SIDs correspond to a first prefix, and N is a positive integer greater than or equal to 2; obtain the N SRv6 SIDs based on the common part and the variable part of the first SRv6 SID; and generate a first route, where the first route includes the first prefix and the N SRv6 SIDs.

According to a sixth aspect, this application provides a network device. The network device includes a communication interface and a processor, the communication interface is configured to perform the method according to any one of the foregoing aspects and receiving and sending operations in any possible implementation of any one of the foregoing aspects, and the processor is configured to perform the method according to any one of the foregoing aspects and another operation other than the receiving and sending operations in any possible implementation of any one of the foregoing aspects. For example, when the network device according to the sixth aspect serves as a first network device to perform the method according to the first aspect, the communication interface is configured to receive a route advertisement packet from a second network device, where the route advertisement packet includes a common field and a variable field, the common field carries a common part of N SRv6 SIDs, the variable field carries a variable part of a first SRv6 SID in the N SRv6 SIDs, the N SRv6 SIDs correspond to a first prefix, and N is a positive integer greater than or equal to 2. The processor is configured to obtain the N SRv6 SIDs based on the common part and the variable part of the first SRv6 SID. The processor is further configured to generate a first route, where the first route includes the first prefix and the N SRv6 SIDs.

According to a seventh aspect, this application provides a communication system. The communication system includes a first network device and a second network device. The first network device is configured to perform some or all operations performed by the first network device according to any one of the first aspect and the possible implementations of the first aspect. The second network device is configured to perform some or all operations performed by the first network device according to any one of the second aspect and the possible implementations of the second aspect.

According to an eighth aspect, this application provides a computer-readable storage medium. The computer-readable storage medium stores instructions, and when the instructions are run on a processor, the method according to any one of the foregoing aspects and some or all operations included in any possible implementation of any one of the foregoing aspects are implemented.

According to a ninth aspect, this application provides a computer program product. The computer program product includes instructions, and when the instructions are run on a processor, the method according to any one of the foregoing aspects and some or all operations included in any possible implementation of any one of the foregoing aspects are implemented.

According to a tenth aspect, this application provides a chip, including an interface circuit and a processor. The interface circuit is connected to the processor, and the processor is configured to enable the chip to perform the method according to any one of the foregoing aspects and some or all operations included in any possible implementation of any one of the foregoing aspects.

According to an eleventh aspect, this application provides a data structure, where the data structure includes a common field and a variable field, the common field carries a common part of N SRv6 SIDs, the variable field carries a variable part of a first SRv6 SID in the N SRv6 SIDs, the N SRv6 SIDs correspond to a first prefix, and N is a positive integer greater than or equal to 2.

In a possible implementation, the data structure further includes N-1 variable fields, the N-1 variable fields respectively carry variable parts of N-1 SRv6 SIDs, and the N-1 SRv6 SIDs are SRv6 SIDs other than the first SRv6 SID in the N SRv6 SIDs.

In a possible implementation, the data structure further includes an offset value and a length value, the length value indicates a length of each of the variable parts of the N SRv6 SIDs, and the offset value indicates an offset location of each of the variable parts of the N SRv6 SIDs in an SRv6 SID.

In a possible implementation, the data structure further includes indication information, and the indication information indicates a quantity of SRv6 SIDs.

In a possible implementation, the data structure further includes an offset value and a length value, the length value indicates a length of the variable part of the first SRv6 SID, and the offset value indicates an offset location of the variable part of the first SRv6 SID in the first SRv6 SID.

In a possible implementation, the data structure includes a first NLRI field, and the first NLRI field includes the N-1 variable fields.

In a possible implementation, the data structure includes a first NLRI field, and the first NLRI field includes the variable field and/or the N-1 variable fields.

In a possible implementation, the data structure includes a first attach type length value field, and the first attach type length value field carries the indication information.

In a possible implementation, the data structure includes a first attach type length value field, the first attach type length value field includes the indication information and/or N behavior fields, and the N behavior fields respectively carry SRv6 endpoint behavior code values associated with the N SRv6 SIDs.

In a possible implementation, the data structure includes an SRv6 SID structure type length value field, and the SRv6 SID structure type length value field carries the offset value and the length value.

In a possible implementation, the data structure includes a second NLRI field, and the second NLRI field includes the variable field.

In a possible implementation, the data structure includes a second attach type length value field, the second attach type length value field includes N behavior fields, and the N behavior fields respectively carry SRv6 endpoint behavior code values associated with the N SRv6 SIDs.

In a possible implementation, the data structure includes a prefix SID attribute, and the common part is carried in the prefix SID attribute of the data structure.

In a possible implementation, the common field is a SID field of the prefix SID attribute.

In a possible implementation, the common part includes a locator part of an SRv6 SID, and each of the variable parts of the N SRv6 SIDs includes a function part of the SRv6 SID and/or an argument part of the SRv6 SID.

### BRIEF DESCRIPTION OF DRAWINGS

FIG. 1a is a diagram of an application scenario according to an embodiment of this application;
FIG. 1b is a diagram of another application scenario according to an embodiment of this application;
FIG. 2 is a flowchart of a route advertisement method according to an embodiment of this application;
FIG. 3 is a diagram of a format of a BGP update message according to an embodiment of this application;
FIG. 4 is a diagram of a format of an SRv6 SID information sub type length value according to an embodiment of this application;
FIG. 5 is a flowchart of another route advertisement method according to an embodiment of this application;
FIG. 6 is a flowchart of still another route advertisement method according to an embodiment of this application;
FIG. 7 is a diagram of a structure of a network device according to an embodiment of this application;
FIG. 8 is a diagram of a structure of another network device according to an embodiment of this application; and
FIG. 9 is a diagram of a structure of still another network device according to an embodiment of this application.

### DESCRIPTION OF EMBODIMENTS

To make persons skilled in the art understand the solutions in this application better, the following clearly and completely describes the technical solutions in embodiments of this application with reference to the accompanying drawings in embodiments of this application. It is clear that the described embodiments are merely a part rather than all of embodiments of this application.

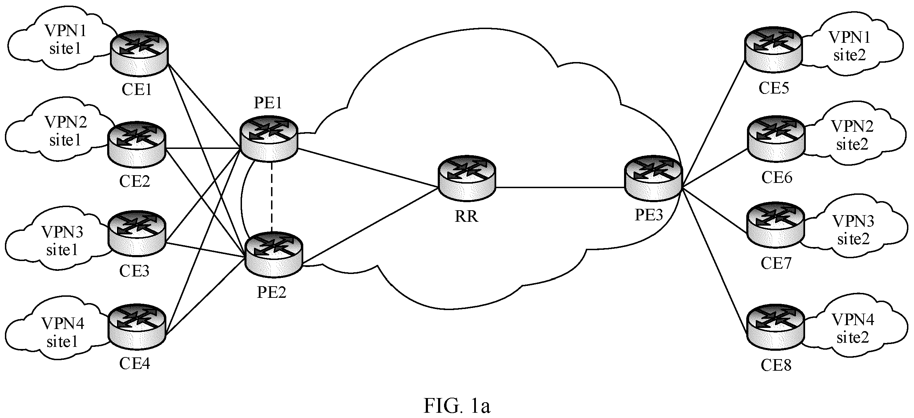

FIG. 1a shows an application scenario according to an embodiment of this application. The following specifically describes the scenario shown in FIG. 1a. In FIG. 1a, a CE, a PE, and a route reflector (Route Reflection, RR) are included. The CE is an edge device of a customer network, and is connected to one or more PEs to enable a customer to access an operator network. The CE may include but is not limited to a router, a switch, a host, or the like. FIG. 1a shows eight CEs: a CE1 to a CE8. The PE is an edge device of the operator network. Traffic of the customer network enters the operator network through the PE. The PE may include but is not limited to a router, a switch, or the like. FIG. 1a shows three PEs: a PE1 to a PE3. The PE1 may be directly connected to the PE2 through a communication link, or may be connected to the PE2 through another device in the operator network. For example, the PE1 is connected to the PE2 through the RR. The RR separately establishes a BGP peer with the PE1, the PE2, and the PE3 to advertise a virtual private network (Virtual Private Network, VPN) route. The RR may be directly connected to the PE1, the PE2, and the PE3, or may be connected to the PE1, the PE2, and the PE3 through a network. In the scenario in FIG. 1a, there may be no RR device, and a BGP peer is directly established between network devices. For example, a BGP peer is established between the PE1 and the PE2. The scenario shown in FIG. 1a is used to carry an EVPN VPWS service. FIG. 1a shows four VPNs, and each VPN includes two sites (site): a site1 and a site2. A VPN1 is used as an example. An edge device of a VPN1 site1 is the CE1, and the CE1 is dual-homed to the PE1 and the PE2 through a communication link. An edge device of a VPN1 site2 is the CE5, and the CE5 is single-homed to the PE3 through a communication link. A connection is provided for two sites of a same VPN through the operator network between PEs.

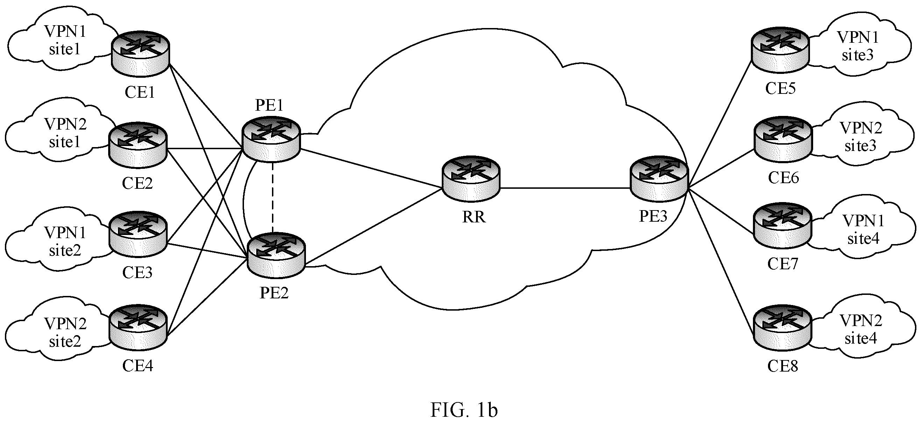

FIG. 1b shows another application scenario according to an embodiment of this application. The following specifically describes the scenario shown in FIG. 1b. A device and a device connection relationship shown in FIG. 1b are the same as those shown in FIG. 1a. Details are not described herein again. The scenario shown in FIG. 1b is used for an EVPN VPLS or an L3VPN service. FIG. 1b shows two VPNs, and each VPN includes four sites: a site1, a site2, a site3, and a sited. A VPN1 is used as an example. An edge device of a VPN1 site1 is the CE1, and the CE1 is dual-homed to the PE1 and the PE2 through a communication link. An edge device of a VPN1 site2 is the CE3, and the CE3 is also dual-homed to the PE1 and the PE2 through a communication link. An edge device of a VPN1 site3 is the CE5, and the CE5 is single-homed to the PE3 through a communication link. An edge device of a VPN1 sited is the CE7, and the CE7 is also single-homed to the PE3 through a communication link. A connection is provided for four sites of a same VPN through the operator network between PEs.

It should be understood that the communication link in embodiments of this application includes both a wired link and a wireless link. In the scenarios shown in FIG. 1a and FIG. 1b, the eight CEs, three PEs, and one RR are merely shown as an example. Actually, the network may include any other quantities of CEs, PEs, and RRs. The quantities of CEs, PEs, and RRs are not limited in embodiments of this application.

In embodiments of this application, services carried through BGP includes the EVPN VPWS, the EVPN VPLS, and the L3VPN service. It should be understood that embodiments of this application are also applicable to another type of service. A type of the service carried through BGP is not limited in embodiments of this application.

The following specifically describes a method used by a PE to advertise a route in a scenario in which the PE allocates one SRv6 SID to each prefix for different types of services carried through BGP in embodiments of this application.

In embodiments of this application, that the PE allocates one SRv6 SID to each prefix includes: The PE allocates an SRv6 SID based on each prefix, the PE allocates an SRv6 SID based on each instance, and the PE allocates an SRv6 SID based on each next hop.

### 1. EVPN VPWS

For the EVPN VPWS, the PE allocates the SRv6 SID based on each prefix. In this case, the PE allocates different SRv6 SIDs to different prefixes. One BGP update message may carry a plurality of prefixes with a same SRv6 SID. If the plurality of prefixes correspond to different SRv6 SIDs, routes corresponding to the plurality of prefixes need to be advertised via a plurality of different BGP update messages respectively. Therefore, for the plurality of prefixes corresponding to the PE, because the plurality of prefixes correspond to different SRv6 SIDs, the plurality of prefixes and the corresponding SRv6 SIDs need to be advertised via the plurality of BGP update messages.

The following provides descriptions with reference to the scenario shown in FIG. 1a. Four EVPN VPWS instances are included on the PE1, which respectively correspond to a VPN1, a VPN2, a VPN3, and a VPN4. Assuming that each CE corresponds to one prefix, the four VPNs correspond to different SRv6 SIDs. To advertise prefixes of the four VPNs and SRv6 SIDs, the PE1 needs to send four BGP update messages, as shown in Table 1. In Table 1, a 1^{st} column indicates a number of a BGP update message sent by the PE1. It should be understood that the number is used to distinguish between different BGP update messages in embodiments of this application, and does not indicate a sequence of sending the BGP update message. A 2^{nd} column indicates an SRv6 SID in the BGP update message, and a 3^{rd} column indicates a prefix in the BGP update message. The following uses a BGP update message 1 as an example for specific description. A packet number of the BGP update message 1 is 1, an SRv6 SID in the BGP update message is 100::1, and a prefix is a prefix1.

In embodiments of this application, a simplified representation form of an IPv6 address is used. The IPv6 address has a size of 128 bits, and is usually represented as x:x:x:x:x:x:x:x, where x is one group of 16-bit hexadecimal numbers, for example, 100:0:0:0:0:0:0:1. It is common that a plurality of xs are 0 in one IPv6 address. Therefore, the IPv6 address is represented in the simplified format, and :: is used to compress one or more groups of xs equal to 0. 100:0:0:0:0:0:0: 1 is simply represented as 100:: 1.

**Table 1**

| Number of a BGP update message | SRv6 SID | Prefix |
|---|---|---|
| 1 | 100::1 | prefix1 |
| 2 | 100::2 | prefix2 |
| 3 | 100::3 | prefix3 |
| 4 | 100::4 | prefix4 |

It can be learned from Table 1 that, for the EVPN VPWS, each BGP update message can be used to advertise only one prefix, and four different prefixes need to be sent via four different BGP update messages respectively. As a result, route advertisement efficiency is low and a route convergence speed is slow.

### 2. EVPN VPLS

For the EVPN VPLS, the PE allocates the SRV6 SID based on each instance. In this case, a plurality of prefixes corresponding to a same EVPN VPLS instance may share a same SRV6 SID. These prefixes may be advertised via one BGP update message. However, different EVPN VPLS instances correspond to different SRV6 SIDs, and corresponding prefixes can be advertised only via a plurality of BGP update messages respectively.

The following provides descriptions with reference to the scenario shown in FIG. 1b. Two EVPN VPLS instances are included on the PE1, which respectively correspond to a VPN1 and a VPN2. Assuming that each CE corresponds to one prefix, each VPN corresponds to two prefixes, and each VPN corresponds to a same SRv6 SID. To advertise four prefixes and two SRv6 SIDs, the PE1 needs to send two BGP update messages, as shown in Table 2. In Table 2, a 1^{st} column indicates a number of a BGP update message sent by the PE1. For a meaning of the number, refer to related descriptions in Table 1. A 2^{nd} column indicates an SRV6 SID in the BGP update message, a 3^{rd} column indicates a 1^{st} prefix in the BGP update message, and a 4^{th} column indicates a 2^{nd} prefix in the BGP update message. The following uses a BGP update message 1 as an example for specific description. A packet number of the BGP update message 1 is 1, an SRV6 SID in the BGP update message is 100:: 1, and prefixes are a prefix 1 and a prefix2.

**Table 2**

| Number of a BGP update message | SID | 1^{st} prefix | 2^{nd} prefix |
|---|---|---|---|
| 1 | 100::1 | prefix1 | prefix2 |
| 2 | 100::2 | prefix3 | prefix4 |

It can be learned from Table 2 that, for the EVPN VPLS, each BGP update message may be used to advertise two prefixes belonging to a same instance, and prefixes belonging to different instances need to be sent via different BGP update messages respectively. Even if the EVPN VPLS instance corresponds to a small quantity of prefixes (for example, in Table 2, one instance corresponds to two prefixes), the prefixes of the EVPN VPLS instance cannot be sent with a prefix of another EVPN VPLS instance via one BGP update message. As a result, route advertisement efficiency is low and a route convergence speed of a network is slow.

### 3. L3VPN

For the L3VPN, the PE has two SRv6 SID allocation manners. In a first manner, the PE allocates the SRv6 SID based on each instance. In a second manner, the PE allocates the SRv6 SID based on each next hop. That is, the PE allocates a same SRv6 SID to a plurality of prefixes of a same next hop. For the two allocation manners, for a BGP update message advertised by the PE, refer to related descriptions in the EVPN VPWS or the EVPN VPLS. Details are not described herein again.

In conclusion, for the EVPN VPWS, the EVPN VPWS, or the L3VPN, because a same BGP update message may be used to advertise only prefixes of a same SRv6 SID, prefixes of different SRv6 SIDs need to be advertised via different BGP update messages respectively. As a result, the route advertisement efficiency is low and the route convergence speed is slow.

To resolve the foregoing technical problem, the draft draft-ietf-bess-srv6-services proposes a route advertisement method. A transmitter PE extracts a common part of a plurality of SRv6 SIDs respectively corresponding to a plurality of different prefixes, includes the common part in a common field of a BGP update message, and then includes a variable part of each SRv6 SID in a label field of a corresponding prefix. After receiving the BGP update message, a receiver PE may separately obtain each of the plurality of SRv6 SIDs based on the common part in the common field and the variable part in the label field of each prefix.

However, in a scenario in which the PE allocates two or more SRv6 SIDs to each prefix, the route advertisement method provided in the draft is no longer applicable. For example, in a scenario in which the PE allocates two SRv6 SIDs to each prefix, when the PE advertises a route by using the route advertisement method provided in the draft, it is expected that a label field of each prefix carries variable parts of two SRv6 SIDs corresponding to the prefix. However, a length of a variable part of one SRv6 SID is usually 16 bits, and a length of the variable parts of the two SRv6 SIDs is 32 bits, which exceeds a length (usually 24 bits) of the label field of the prefix. Consequently, the route advertisement method provided in the draft is not applicable to the scenario in which the PE allocates the two SRv6 SIDs to each prefix. For a similar reason, the route advertisement method provided in the draft is also not applicable to a scenario in which the PE allocates more than two SRv6 SIDs to each prefix.

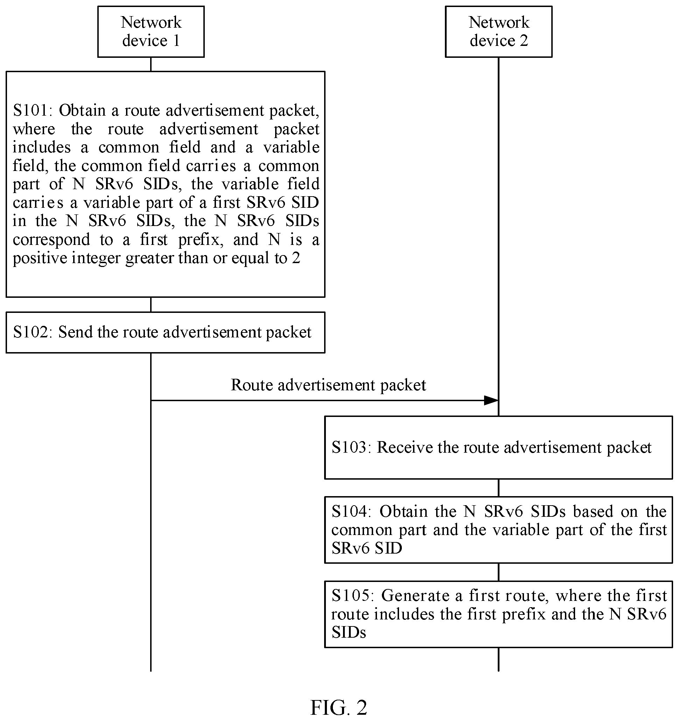

Refer to FIG. 2. An embodiment of this application provides a route advertisement method 100, to improve route advertisement efficiency and increase a route convergence speed. The method 100 may be applied to the scenarios shown in FIG. 1a and FIG. 1b. The following describes the method 100 by using FIG. 1a as an example. A network device 1 is equivalent to the PE1 or the RR shown in FIG. 1a, a network device 2 is equivalent to the PE2 or the PE3 shown in FIG. 1a, and the method 100 includes S101 to S105.

S101: The network device 1 obtains a route advertisement packet, where the route advertisement packet includes a common field and a variable field, the common field carries a common part of N SRv6 SIDs, the variable field carries a variable part of a first SRv6 SID in the N SRv6 SIDs, the N SRv6 SIDs correspond to a first prefix, and N is a positive integer greater than or equal to 2.

In this embodiment of this application, when a network device allocates an SRv6 SID based on each prefix, the N SRv6 SIDs correspond to the first prefix. When a network device allocates an SRv6 SID based on each instance, the N SRv6 SIDs further correspond to a second prefix, and the first prefix and the second prefix correspond to a same VPN instance. When a network device allocates an SRv6 SID based on each next hop, the N SRv6 SIDs further correspond to a second prefix, and the first prefix and the second prefix correspond to a same next hop.

In a specific implementation, the network device 1 obtains the route advertisement packet in the following two manners.

Manner 1: The network device 1 generates a route advertisement packet.

Manner 2: The network device 1 receives a route advertisement packet sent by another device.

In a specific implementation of generating the route advertisement packet in the manner 1, the network device 1 generates the route advertisement packet in the following two manners.

Manner 1: The network device 1 generates the route advertisement packet, and the network device 1 obtains the common part of the N SRv6 SIDs corresponding to the first prefix, and includes the common part in the common field in the route advertisement packet. The network device 1 includes variable parts of the N SRv6 SIDs in N variable fields respectively in the route advertisement packet. The network device 1 includes the variable part of the first SRv6 SID in the N SRv6 SIDs in a first variable field, and the network device 1 includes variable parts of N-1 SRv6 SIDs in N-1 variable fields respectively.

In this embodiment of this application, the N-1 SRv6 SIDs are SRv6 SIDs other than the first SRv6 SID in the N SRv6 SIDs.

In this embodiment of this application, the common part of the N SRv6 SIDs includes a locator part of an SRv6 SID, and each of the variable parts of the N SRv6 SIDs includes a function part of the SRv6 SID and/or an argument part of the SRv6 SID.

In a specific implementation, the route advertisement packet further includes an offset value and a length value, the length value indicates a length of each of the variable parts of the N SRv6 SIDs, and the offset value indicates an offset location of each of the variable parts of the N SRv6 SIDs in an SRv6 SID. It should be understood that the route advertisement packet may alternatively not include the offset value and the length value, and the network device 1 and the network device 2 negotiate or are configured with a default offset value and a default length value.

Manner 2: The network device 1 generates the route advertisement packet. The network device 1 obtains the common part of the N SRv6 SIDs corresponding to the first prefix, and includes the common part in the common field in the route advertisement packet. The network device 1 includes the variable part of the first SRv6 SID in the N SRv6 SIDs in the variable field in the route advertisement packet. The network device 1 includes indication information indicating a quantity of the N SRv6 SIDs, for example, N or N-1, in a field corresponding to the indication information.

In a specific implementation of the manner 2, that the N SRv6 SIDs include a specific relationship includes the following three cases.

When the N SRv6 SIDs are an arithmetic progression, and a common difference of the arithmetic progression is 1 or -1, the route advertisement packet may not include the common difference of the arithmetic progression, or include the common difference of the arithmetic progression, where the common difference is equal to 1 or -1. When the common difference is 1, the first SRv6 SID is an SRv6 SID with a smallest value in the N SRv6 SIDs. When the common difference is -1, the first SRv6 SID is an SRv6 SID with a largest value in the N SRv6 SIDs.

When the N SRv6 SIDs are an arithmetic progression, and a common difference of the arithmetic progression is not equal to 1 or -1, the route advertisement packet further includes the common difference of the arithmetic progression, where the common difference is equal to a difference between each SRv6 SID behind a second SRv6 SID and a previous SRv6 SID in the N SRv6 SIDs, and the second SRv6 SID is an SRv6 SID adjacent to the first SRv6 SID when the N SRv6 SIDs are sequentially arranged.

The N SRv6 SIDs are a non-arithmetic progression, the route advertisement packet further includes a difference between each SRv6 SID behind a second SRv6 SID and a previous SRv6 SID in the N SRv6 SIDs, and the second SRv6 SID is an SRv6 SID adjacent to the first SRv6 SID when the N SRv6 SIDs are sequentially or randomly arranged.

In a specific implementation, the route advertisement packet further includes an offset value and a length value, the length value indicates a length of the variable part of the first SRv6 SID, and the offset value indicates an offset location of the variable part of the first SRv6 SID in the first SRv6 SID. It should be understood that the route advertisement packet may alternatively not include the offset value and the length value, and the network device 1 and the network device 2 negotiate or are configured with a default offset value and a default length value.

In this embodiment of this application, the route advertisement packet is used to advertise at least one of the following routes: an EVPN type 1 route, an EVPN type 2 route, an EVPN type 5 route, and a layer 3 virtual private network route.

In this embodiment of this application, N is the positive integer greater than or equal to 2. When N is equal to 2, the first SRv6 SID in the N SRv6 SIDs is used by a remote PE to forward traffic, and the second SRv6 SID in the N SRv6 SIDs is used to forward traffic through a bypass (bypass) link when a connection between a PE and a CE that are dual-homed on a same side is faulty. The following uses the scenario shown in FIG. 1a as an example for description. In FIG. 1a, each PE, for example, the PE1, allocates two SRv6 SIDs to each prefix, and then sends the two SRv6 SIDs to the PE2 and the PE3 via a BGP update message through the RR. The remote PE3 sends traffic to the PE1 via the first SRv6 SID. When a connection between the PE2 and a CE that are dual-homed on a same side is faulty, the second SRv6 SID is used to forward traffic. For example, the PE3 sends traffic to the PE1 and the PE2 in a load balancing manner. Assuming that a connection between the PE2 and the CE3 is faulty, the PE2 forwards traffic to the PE1 through a bypass link between the PE2 and the PE1 via the second SRv6 SID allocated by the PE1, and then forwards traffic to the CE3 through the PE1. In this way, when the connection between the PE2 and the CE3 is faulty, it can also be ensured that traffic reaches a customer device through PE2-PE1-CE3, to avoid a traffic loss. Further, in this scenario, the PE1 identifies traffic including the second SRv6 SID, so that the traffic is not forwarded to the PE2 again through the bypass link, to avoid a traffic loop. When N is equal to 3, three SRv6 SIDs may be all used by the remote PE to forward traffic. When the remote PE sends traffic, the first SRv6 SID, the second SRv6 SID, or a third SRv6 SID may be used to implement load balancing or service isolation. It should be understood that when N is greater than 3, the N SRv6 SIDs may also be used by the remote PE to forward traffic, to implement load balancing or service isolation.

S102: The network device 1 sends the route advertisement packet to the network device 2.

The network device 1 may directly send the route advertisement packet to the network device 2, or may send the route advertisement packet to the network device 2 through another network device, for example, an RR.

S103: The network device 2 receives the route advertisement packet.

S104: The network device 2 obtains the N SRv6 SIDs based on the common part and the variable part of the first SRv6 SID.

In a specific implementation, the network device 2 obtains the N SRv6 SIDs in the following two manners.

Manner 1: When the network device 1 generates the route advertisement packet in the manner 1, the common field in the route advertisement packet carries the common part of the N SRv6 SIDs, the N variable fields in the route advertisement packet respectively carry the variable parts of the N SRv6 SIDs, the first variable field carries the variable part of the first SRv6 SID in the N SRv6 SIDs, and the N-1 variable fields respectively carry the variable parts of the N-1 SRv6 SIDs. Because each of the N SRv6 SIDs includes the common part and the variable part of the SRv6 SID, the network device 2 obtains the N SRv6 SIDs based on the common part, the variable part of the first SRv6 SID, and the variable parts of the N-1 SRv6 SIDs. The network device 2 obtains the first SRv6 SID based on the common part and the variable part of the first SRv6 SID. The network device 2 separately obtains the N-1 SRv6 SIDs based on the common part and the variable parts of the N-1 SRv6 SIDs.

In a specific implementation, when the route advertisement packet includes the offset value and the length value, the network device 2 respectively obtains the variable parts of the N SRv6 SIDs from the N variable fields based on the length that is of each of the variable parts of the N SRv6 SIDs and that is indicated by the length value, and the network device 2 separately combines the common part and the variable parts of the N SRv6 SIDs based on the offset location that is of each of the variable parts of the N SRv6 SIDs in the SRv6 SID and that is indicated by the offset value, to obtain the N SRv6 SIDs. For example, the offset value in the route advertisement packet is 112, and the length value is 16 (unit: bit). The network device 2 obtains the variable parts, of the N SRv6 SIDs, whose length is 16 bits from the N variable fields respectively. The network device 2 determines, based on the offset value 112, that the offset location of the variable part is 112^{th} to 127^{th} bits counted from left to right, and then may determine that an offset location of the common part is 0^{th} to 111^{th} bits counted from left to right, to obtain the N SRv6 SIDs. It should be understood that the route advertisement packet may alternatively not include the offset value and the length value, and the network device 1 and the network device 2 negotiate or are configured with the default offset value and the default length value. The network device 2 separately combines the common part and the variable parts of the N SRv6 SIDs based on the default offset value and the default length value, to obtain the N SRv6 SIDs.

Manner 2: When the network device 1 generates the route advertisement packet in the manner 2, the common field in the route advertisement packet carries the common part of the N SRv6 SIDs, the variable field in the route advertisement packet carries the variable part of the first SRv6 SID, and the route advertisement packet further includes indication information indicating a quantity of the N SRv6 SIDs. The network device 2 obtains the N SRv6 SIDs based on the common part, the variable part of the first SRv6 SID, and the indication information. The network device 2 obtains the first SRv6 SID based on the common part and the variable part of the first SRv6 SID. The network device 2 learns, based on the indication information, that there are further the N-1 SRv6 SIDs in the N SRv6 SIDs in addition to the first SRv6 SID. The network device 2 obtains the N-1 SRv6 SIDs based on the first SRv6 SID and the indication information.

In a specific implementation of the manner 2, that the N SRv6 SIDs have a specific relationship includes the following three cases.

When the route advertisement packet does not include a common difference, the N SRv6 SIDs are an arithmetic progression, and the common difference is equal to 1 or -1. In this case, the first SRv6 SID may be a smallest value or a largest value in the arithmetic progression. When the first SRv6 SID is the smallest value in the arithmetic progression, the network device 2 obtains the N-1 SRv6 SIDs by sequentially adding 1 to the first SRv6 SID. When the first SRv6 SID is the largest value in the arithmetic progression, the network device 2 obtains the N-1 SRv6 SIDs by sequentially adding -1 to the first SRv6 SID.

When the route advertisement packet includes one common difference, it indicates that the N SRv6 SIDs are an arithmetic progression with the common difference of any integer. In this case, a difference between each SRv6 SID behind a second SRv6 SID and a previous SRv6 SID in the N SRv6 SIDs is equal to the common difference, and the second SRv6 SID is an SRv6 SID adjacent to the first SRv6 SID when the N SRv6 SIDs are sequentially arranged. The network device 2 obtains the N-1 SRv6 SIDs by sequentially adding the common difference to the first SRv6 SID.

When the route advertisement packet includes a difference between each SRv6 SID behind a second SRv6 SID and a previous SRv6 SID in the N SRv6 SIDs, and the second SRv6 SID is an SRv6 SID adjacent to the first SRv6 SID when the N SRv6 SIDs are sequentially or randomly arranged, it indicates that the N SRv6 SIDs are a non-arithmetic progression. In this case, the network device 2 obtains the N-1 SRv6 SIDs by sequentially adding the difference between each SRv6 SID behind the second SRv6 SID and the previous SRv6 SID in the N SRv6 SIDs to the first SRv6 SID.

In a specific implementation, when the route advertisement packet includes the offset value and the length value, the network device 2 obtains the variable part of the first SRv6 SID from the variable field based on the length that is of the variable part of the first SRv6 SID and that is indicated by the length value, and the network device 2 combines the common part and the variable part of the first SRv6 SID based on the offset location that is of the variable part of the first SRv6 SID in the first SRv6 SID and that is indicated by the offset value, to obtain the first SRv6 SID. It should be understood that the route advertisement packet may alternatively not include the offset value and the length value, and the network device 1 and the network device 2 negotiate or are configured with the default offset value and the default length value. For a specific implementation in which the network device 2 combines the common part and the variable part of the first SRv6 SID based on the offset location to obtain the first SRv6 SID, refer to related descriptions in the manner 1. Details are not described herein again.

S105: The network device 2 generates a first route, where the first route includes the first prefix and the N SRv6 SIDs.

The network device 2 generates the first route. The first route is a route that enables traffic to reach the first prefix. The first route may be a routing entry, where the routing entry includes the first prefix and the N SRv6 SIDs, or may be a plurality of routing entries, where the plurality of routing entries include the first prefix and the N SRv6 SIDs. A quantity of routing entries is not limited in this embodiment of this application.

In a specific implementation, the N SRv6 SIDs further correspond to a second prefix. The network device 2 generates a second route, where the second route is a route that enables traffic to reach the second prefix, and the second route includes the second prefix and the N SRv6 SIDs. For the second route, refer to the descriptions of the first route. Details are not described herein again.

In the route advertisement method described in the method 100, because the N SRv6 SIDs have the same common part, the route advertisement packet carries the common part by using the common field, so that the common part of the N SRv6 is advertised via one route advertisement packet. Therefore, in the solution provided in this embodiment of this application, in a scenario in which the PE allocates the N (N is the positive integer greater than or equal to 2) SRv6 SIDs to each prefix, the common part of the N SRv6 SIDs does not need to be separately carried in different fields of the route advertisement packet, to reduce a length of the route advertisement packet, reduce a bandwidth occupied by the route advertisement packet, and improve route advertisement efficiency.

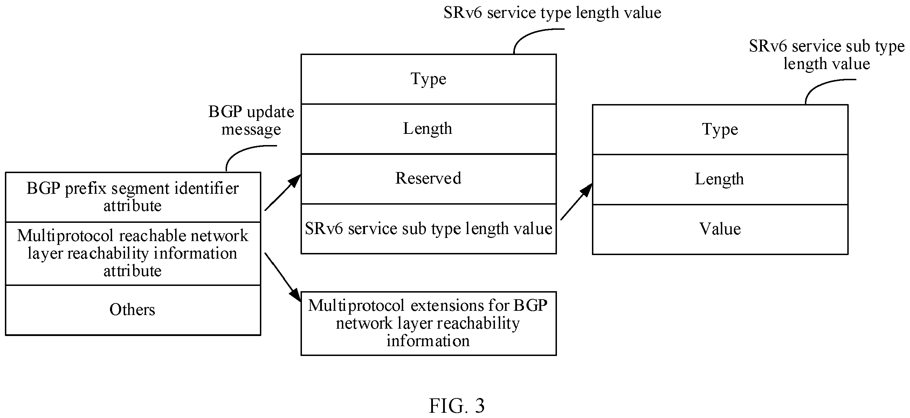

The foregoing describes the route advertisement method 100 provided in this embodiment of this application. The following describes, with reference to FIG. 3, a packet format of a route advertisement packet provided in an embodiment of this application. In this embodiment of this application, the route advertisement packet includes a BGP update message. The following describes, with reference to a format of the BGP update message, fields related to this embodiment of this application in the BGP update message. In the BGP update message shown in FIG. 3, the fields related to this embodiment of this application include a BGP prefix segment identifier (BGP prefix SID) attribute (also referred to as a prefix attribute or a prefix SID attribute) and a multiprotocol reachable network layer reachability information (Multiprotocol Reachable Network Layer Reachability Information, MP_REACH_NLRI) attribute. A field unrelated to this embodiment of this application is uniformly represented by others, and is not listed one by one. The MP_REACH_NLRI attribute includes multiprotocol extensions for BGP (Multiprotocol Extensions for BGP, MP-BGP) NLRI carrying a prefix and a route. The BGP prefix SID attribute includes an SRv6 service (service) type length value (Type Length Value, TLV), and the SRv6 service TLV includes two TLVs, which are respectively used to implement layer 2 SRv6 SID advertisement of and layer 3 SRv6 SID advertisement.

The following first describes the MP-BGP NLRI. The MP-BGP NLRI includes two parts: a prefix and a route attribute. For different route types, prefixes and route attributes are different. For example, for an ethernet auto-discovery route (also referred to as an EVPN type 1 route), NLRI includes a route distinguisher (route distinguisher, RD), an ethernet segment identifier (Ethernet segment identifier, ESI), an ethernet tag (Ethernet tag) identifier, and a multiprotocol label switching (MPLS) label. The ESI and the ethernet tag identifier are a prefix of the NLRI, and the MPLS label is a route attribute of the NLRI. The route attribute of the NLRI includes a label field, for example, an MPLS label field carrying a variable part of an SRv6 SID in this embodiment of this application. For definitions of a prefix and a route attribute in an EVPN type 2 route, refer to descriptions in RFC7432. For definitions of a prefix and a route attribute in an EVPN type 5 route, refer to descriptions in RFC 9136. For definitions of a prefix and a route attribute in a layer 3 virtual private network route, refer to descriptions in RFC 4364. Details are not described herein.

Next, the SRv6 service TLV is described. The SRv6 service TLV includes a type, a length, reserved, and an SRv6 service sub type length value (sub-TLV). The SRv6 service sub-TLV carries information related to an SRv6 service. The SRv6 service sub-TLV includes a type, a length, and a value.

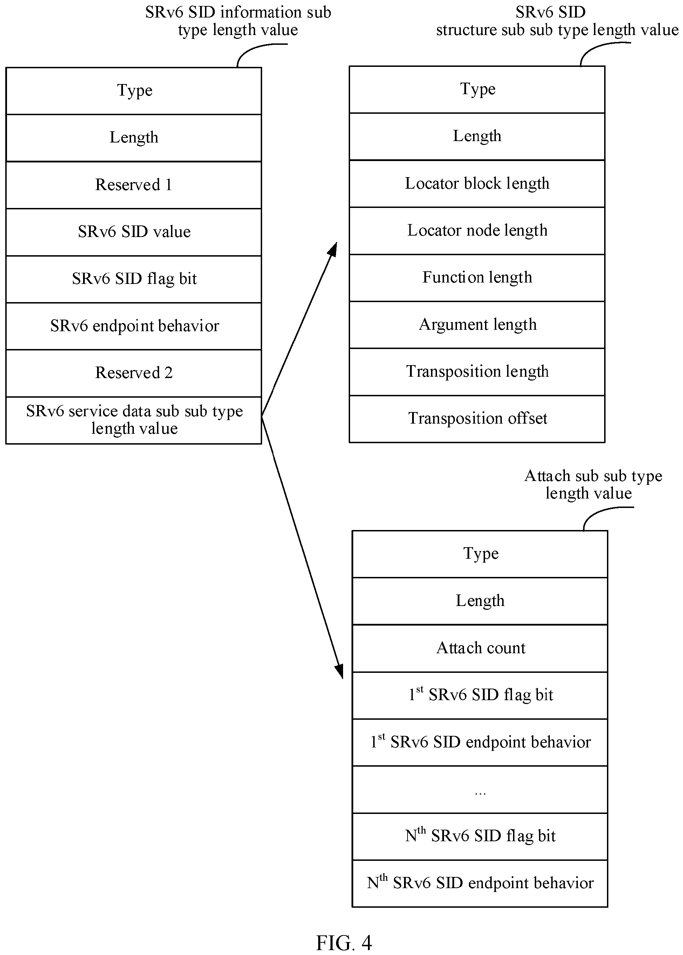

When the type of the SRv6 service sub-TLV is equal to 1, the SRv6 service sub-TLV indicates an SRv6 SID information (information) sub-TLV, and a format of the SRv6 SID information sub-TLV is shown in FIG. 4. The SRv6 SID information sub-TLV includes a type, a length, reserved 1, an SRv6 SID value, an SRv6 SID flag bit, an SRv6 endpoint behavior, reserved 2, and an SRv6 service data (data) sub sub type length value (sub-sub-TLV). A type field carries a type of the sub-TLV. A length field carries a length of the sub-TLV. An SRv6 SID value field carries a common part of N SRv6 SIDs. An SRv6 SID flag bit is not defined currently, should be filled with 0 when a BGP update message is sent, and is ignored when a BGP update message is received. An SRv6 endpoint behavior field carries an endpoint behavior code value related to the SRv6 SID. The SRv6 service data sub-sub-TLV is used to advertise an attribute of the SRv6 SID.

When a type of the SRv6 service data sub-sub-TLV is equal to 1, the SRv6 service data sub-sub-TLV indicates an SRv6 SID structure (structure) sub-sub-TLV, and the SRv6 SID structure sub-sub-TLV is used to advertise a length of each part (including a common part and a variable part) of the SRv6 SID. The SRv6 SID structure sub-sub-TLV includes a type, a length, a locator block length (locator block length), a locator node length (locator node length), a function length (function length), an argument length (argument length), a transposition length (transposition length), and a transposition offset (transposition offset). The type is equal to 1, a length field carries a total length of the TLV value, a locator block length field carries a length of an SRv6 SID locator block, a locator node length field carries a length of an SRv6 SID locator node, an argument length field carries a length of an argument field in the SRv6 SID, a transposition length field carries a length of a variable part of the SRv6 SID, and a transposition offset field carries an offset location of the variable part of the SRv6 SID in the SRv6 SID.

In addition, an attach (attach) sub-sub-TLV is defined in this embodiment of this application, and the attach sub-sub-TLV carries information about a quantity of SRv6 SIDs, and a flag and a behavior of the SRv6 SID. The attach sub-sub-TLV includes a type, a length, an attach count (attach count), an SRv6 SID flag bit, and an SRv6 endpoint behavior. A type field carries a type of the TLV. A length field carries a total length of the TLV value. An attach count field carries indication information indicating the quantity of SRv6 SIDs. The attach sub-sub-TLV further includes N SRv6 SID flag bit fields and N SRv6 endpoint behavior fields. The N SRv6 SID flag bit fields are not defined currently, should be filled with 0 when a BGP update message is sent, and is ignored when a BGP update message is received. Each of the N SRv6 endpoint behavior fields separately carries an endpoint behavior code value related to the SRv6 SID.

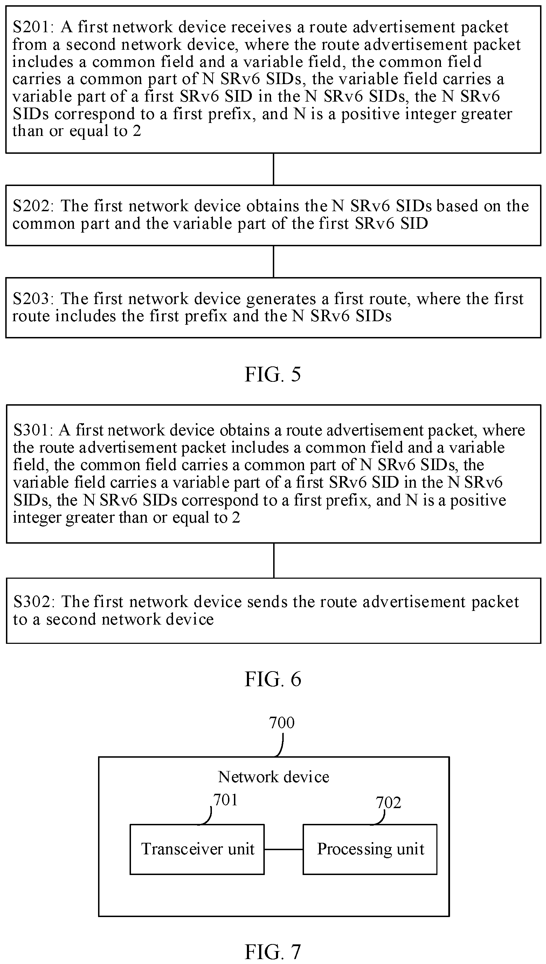

The foregoing describes the route advertisement method 100 and the specific format of the route advertisement packet in the method 100 provided in embodiments of this application. The following describes a route advertisement method 200 provided in an embodiment of this application with reference to FIG. 5. The method 200 may be applied to the scenarios shown in FIG. 1a and FIG. 1b. When the method 200 is applied to the scenario shown in FIG. 1a, a first network device in the method 200 corresponds to the PE2 or the PE3 in FIG. 1a, and a second network device in the method 200 corresponds to the PE1 or the RR in FIG. 1a. The method 200 may be specifically used to implement the method 100. When the method 200 is used to implement the method 100, the first network device is equivalent to the network device 2 in the method 100, and the second network device is equivalent to the network device 1 in the method 100. The method 200 includes S201 to S203.

S201: The first network device receives a route advertisement packet from the second network device, where the route advertisement packet includes a common field and a variable field, the common field carries a common part of N SRv6 SIDs, the variable field carries a variable part of a first SRv6 SID in the N SRv6 SIDs, the N SRv6 SIDs correspond to a first prefix, and N is a positive integer greater than or equal to 2.

The route advertisement packet includes the following two formats.

Format 1: The route advertisement packet includes the common field and the variable field, the common field carries the common part of the N SRv6 SIDs, the variable field carries the variable part of the first SRv6 SID in the N SRv6 SIDs, the N SRv6 SIDs correspond to the first prefix, and N is the positive integer greater than or equal to 2. The route advertisement packet further includes N-1 variable fields, and the N-1 variable fields respectively carry variable parts of N-1 SRv6 SIDs.

The route advertisement packet further includes an offset value and a length value, the length value indicates a length of each of the variable parts of the N SRv6 SIDs, and the offset value indicates an offset location of each of the variable parts of the N SRv6 SIDs in an SRv6 SID. It should be understood that the route advertisement packet may alternatively not include the offset value and the length value, and the first network device and the second network device negotiate or are configured with a default offset value and a default length value.

In a specific implementation, the route advertisement packet includes a BGP update message or a BGP link state protocol advertisement message. When the route advertisement packet is the BGP update message, the common field is a SID field in the SRv6 SID information sub-TLV in the prefix SID attribute of the BGP update message shown in FIG. 3 and FIG. 4. It should be understood that the SID field may be specifically an SRv6 SID value field, or may be another field. This is not limited in this embodiment of this application. It should be understood that the common field may alternatively be in another field of the prefix SID attribute. This is not limited in this embodiment of this application. The route advertisement packet includes a first NLRI field, the first NLRI field includes the N-1 variable fields, the route advertisement packet includes a second NLRI field, the second NLRI field includes the variable field, and the first NLRI field and the second NLRI field are MP-BGP NLRI fields of the BGP update message shown in FIG. 3. It should be understood that the first NLRI field and the second NLRI field may be a same NLRI field, or may be different NLRI fields. This is not limited in this embodiment of this application. The variable field may be an MPLS label field, or may be another field. This is not limited in this embodiment of this application. The route advertisement packet further includes an SRv6 SID structure sub-sub-TLV shown in FIG. 4. A transposition length field in the SRv6 SID structure sub-sub-TLV carries the length value, and a transposition offset field in the SRv6 SID structure sub-sub-TLV carries the offset value. It should be understood that the route advertisement packet may alternatively not include the offset value and the length value. In this case, the route advertisement packet may include or not include the SRv6 SID structure sub-sub TLV. This is not limited in this embodiment of this application. The route advertisement packet further includes a second attach type length value field, the second attach type length value field is an attach sub-sub-TLV field shown in FIG. 4, the second attach type length value field includes N behavior fields, and the N behavior fields respectively carry SRv6 endpoint behavior code values associated with the N SRv6 SIDs. It should be understood that the route advertisement packet may alternatively not include the second attach type length value field. In this case, the SRv6 endpoint behavior code values associated with the N SRv6 SIDs may be a default configuration. This is not limited in this embodiment of this application. When the route advertisement packet is the BGP link state protocol advertisement message, information related to this embodiment of this application is carried in a field corresponding to the BGP link state protocol advertisement message. A manner in which the BGP link state protocol advertisement message carries the information related to this embodiment of this application is not limited in this embodiment of this application.

Format 2: The route advertisement packet includes the common field and the variable field, the common field carries the common part of the N SRv6 SIDs, the variable field carries the variable part of the first SRv6 SID in the N SRv6 SIDs, the N SRv6 SIDs correspond to the first prefix, and N is the positive integer greater than or equal to 2. The route advertisement packet further includes indication information, and the indication information indicates a quantity of the N SRv6 SIDs.

In a specific implementation, that the N SRv6 SIDs have a specific relationship includes the following three cases.

The N SRv6 SIDs are an arithmetic progression, and the route advertisement packet does not include a common difference of the arithmetic progression. In this case, the common difference of the arithmetic progression is 1 or -1.

The N SRv6 SIDs are an arithmetic progression, the route advertisement packet further includes a common difference of the arithmetic progression, a difference between each SRv6 SID behind a second SRv6 SID and a previous SRv6 SID in the N SRv6 SIDs is equal to the common difference, and the common difference is any integer.

The N SRv6 SIDs are a non-arithmetic progression. In this case, the route advertisement packet further includes a difference between each SRv6 SID behind a second SRv6 SID and a previous SRv6 SID in the N SRv6 SIDs.

The route advertisement packet further includes an offset value and a length value, the length value indicates a length of the variable part of the first SRv6 SID, and the offset value indicates an offset location of the variable part of the first SRv6 SID in the first SRv6 SID. It should be understood that the route advertisement packet may alternatively not include the offset value and the length value, and the first network device and the second network device negotiate or are configured with a default offset value and a default length value.

In a specific implementation, the route advertisement packet includes a BGP update message or a BGP link state protocol advertisement message. When the route advertisement packet is the BGP update message, the common field is a SID field in the SRv6 SID information sub-TLV in the prefix SID attribute of the BGP update message shown in FIG. 3 and FIG. 4. It should be understood that the SID field may be specifically an SRv6 SID value field, or may be another field. This is not limited in this embodiment of this application. It should be understood that the common field may alternatively be in another field of the prefix SID attribute. This is not limited in this embodiment of this application. The route advertisement packet includes a second NLRI field, the second NLRI field includes the variable field, and the second NLRI field is an MP-BGP NLRI field of the BGP update message shown in FIG. 3. The variable field may be an MPLS label field, or may be another field. This is not limited in this embodiment of this application. The route advertisement packet further includes a first attach type length value field, the first attach type length value field is an attach sub-sub-TLV field shown in FIG. 4, and the first attach type length value field carries the indication information. The route advertisement packet further includes a second attach type length value field, the second attach type length value field is an attach sub-sub-TLV field shown in FIG. 4, the second attach type length value field includes N behavior fields, and the N behavior fields respectively carry SRv6 endpoint behavior code values associated with the N SRv6 SIDs. It should be understood that the first attach type length value field and the second attach type length value field may be a same field, or may be different fields. This is not limited in this embodiment of this application. It should be understood that the route advertisement packet may alternatively not include the N behavior fields. In this case, the SRv6 endpoint behavior code values associated with the N SRv6 SIDs may be a default configuration. This is not limited in this embodiment of this application. The route advertisement packet further includes an SRv6 SID structure sub-sub TLV shown in FIG. 4. A transposition length field in the SRv6 SID structure sub-sub TLV carries the length value, and a transposition offset field in the SRv6 SID structure sub-sub TLV carries the offset value. It should be understood that the route advertisement packet may alternatively not include the offset value and the length value. In this case, the route advertisement packet may include or not include the SRv6 SID structure sub-sub TLV. This is not limited in this embodiment of this application. When the route advertisement packet is the BGP link state protocol advertisement message, information related to this embodiment of this application is carried in a field corresponding to the BGP link state protocol advertisement message. A manner in which the BGP link state protocol advertisement message carries the information related to this embodiment of this application is not limited in this embodiment of this application.

S202: The first network device obtains the N SRv6 SIDs based on the common part and the variable part of the first SRv6 SID.

When the route advertisement packet is in the format 1 in S201, the first network device obtains the N SRv6 SIDs based on the common part, the variable part of the first SRv6 SID, and the variable parts of the N-1 SRv6 SIDs. For a specific implementation of this step, refer to related descriptions of the manner 1 in S104. Details are not described herein again.

When the route advertisement packet is in the format 2 in S201, the first network device obtains the N SRv6 SIDs based on the common part, the variable part of the first SRv6 SID, and the indication information. For a specific implementation of this step, refer to related descriptions of the manner 2 in S104. Details are not described herein again.

S203: The first network device generates a first route, where the first route includes the first prefix and the N SRv6 SIDs.

In a specific implementation, the N SRv6 SIDs further correspond to a second prefix, and the first network device generates a second route, where the second route includes the second prefix and the N SRv6 SIDs.

For a specific implementation of S203, refer to related descriptions of S105. Details are not described herein again.

The following describes a route advertisement method 300 provided in an embodiment of this application with reference to FIG. 6. The method 300 may be applied to the scenarios shown in FIG. 1a and FIG. 1b. When the method 300 is applied to the scenario shown in FIG. 1a, a first network device in the method 300 corresponds to the PE1 or the RR in FIG. 1a, and a second network device in the method 300 corresponds to the PE2 or the PE3 in FIG. 1a. The method 300 may be specifically used to implement the method 100. When the method 300 is used to implement the method 100, the first network device is equivalent to the network device 1 in the method 100, and the second network device is equivalent to the network device 2 in the method 100. The method 300 includes S301 and S302.

S301: The first network device obtains a route advertisement packet, where the route advertisement packet includes a common field and a variable field, the common field carries a common part of N SRv6 SIDs, the variable field carries a variable part of a first SRv6 SID in the N SRv6 SIDs, the N SRv6 SIDs correspond to a first prefix, and N is a positive integer greater than or equal to 2.

In a specific implementation, the first network device obtains the route advertisement packet in the following two manners.

Manner 1: The first network device generates a route advertisement packet.

Manner 2: The first network device receives a route advertisement packet sent by another device.

In a specific implementation of the manner 1, the first network device may generate the route advertisement packet in the following two formats.

Format 1: The route advertisement packet includes the common field and the variable field, the common field carries the common part of the N SRv6 SIDs, the variable field carries the variable part of the first SRv6 SID in the N SRv6 SIDs, the N SRv6 SIDs correspond to the first prefix, and N is the positive integer greater than or equal to 2. The route advertisement packet further includes N-1 variable fields, the N-1 variable fields respectively carry variable parts of N-1 SRv6 SIDs, and the N-1 SRv6 SIDs are SRv6 SIDs other than the first SRv6 SID in the N SRv6 SIDs.

For a specific implementation of this step, refer to related descriptions of the manner 1 of generating the route advertisement packet in S101. Details are not described herein again.

For a format of the route advertisement packet in this step, refer to related descriptions of the format 1 in S201. Details are not described herein again.

Format 2: The route advertisement packet includes the common field and the variable field, the common field carries the common part of the N SRv6 SIDs, the variable field carries the variable part of the first SRv6 SID in the N SRv6 SIDs, the N SRv6 SIDs correspond to the first prefix, and N is the positive integer greater than or equal to 2. The route advertisement packet further includes indication information, and the indication information indicates a quantity of the N SRv6 SIDs.

For a specific implementation of this step, refer to related descriptions of the manner 2 of generating the route advertisement packet in S101. Details are not described herein again.

For a format of the route advertisement packet in this step, refer to related descriptions of the format 2 in S201. Details are not described herein again.

S302: The first network device sends the route advertisement packet to the second network device.

For a specific implementation of S302, refer to related descriptions of S102. Details are not described herein again.

In addition, an embodiment of this application further provides a network device 700. FIG. 7 is a diagram of a structure of the network device 700 according to this embodiment of this application. The network device 700 shown in FIG. 7 includes a transceiver unit 701 and a processing unit 702. The network device 700 may be configured to perform the method 100, the method 200, or the method 300 in the foregoing embodiment. When the network device 700 is configured to perform the method 200 in the foregoing embodiment, the network device 700 is equivalent to the first network device in the method 200. The network device 700 may be used in the application scenarios shown in FIG. 1a and FIG. 1b, for example, may be the PE2 device in the scenario shown in FIG. 1a. The transceiver unit 701 is configured to perform receiving and sending operations performed by the first network device in the method 200. The processing unit 702 is configured to perform an operation other than the receiving and sending operations performed by the first network device in the method 200. An example is provided.

The transceiver unit 701 is configured to receive a route advertisement packet from a second network device, where the route advertisement packet includes a common field and a variable field, the common field carries a common part of N SRv6 SIDs, the variable field carries a variable part of a first SRv6 SID in the N SRv6 SIDs, the N SRv6 SIDs correspond to a first prefix, and N is a positive integer greater than or equal to 2.

The processing unit 702 is configured to obtain the N SRv6 SIDs based on the common part and the variable part of the first SRv6 SID.

The processing unit 702 is further configured to generate a first route, where the first route includes the first prefix and the N SRv6 SIDs.

When the network device 700 is configured to perform the method 300 in the foregoing embodiment, the network device 700 is equivalent to the first network device in the method 300. The network device 700 may be used in the application scenarios shown in FIG. 1a and FIG. 1b, for example, may be the PE1 device in the scenario shown in FIG. 1a. The transceiver unit 701 is configured to perform receiving and sending operations performed by the first network device in the method 300. The processing unit 702 is configured to perform an operation other than the receiving and sending operations performed by the first network device in the method 300. An example is provided.

The processing unit 702 is configured to obtain a route advertisement packet, where the route advertisement packet includes a common field and a variable field, the common field carries a common part of N SRv6 SIDs, the variable field carries a variable part of a first SRv6 SID in the N SRv6 SIDs, the N SRv6 SIDs correspond to a first prefix, and N is a positive integer greater than or equal to 2.

The transceiver unit 701 is configured to send the route advertisement packet to a second network device.

It should be noted that, in this embodiment of this application, division into the units is an example, and is merely logical function division. During actual implementation, another division manner may be used. Functional units in this embodiment of this application may be integrated into one processing unit, or each of the units may exist alone physically, or two or more units are integrated into one unit. For example, in the foregoing embodiment, the transceiver unit 701 and the processing unit 702 may be a same unit, or may be different units. The integrated unit may be implemented in a form of hardware, for example, a chip, or may be implemented in a form of a software functional unit.

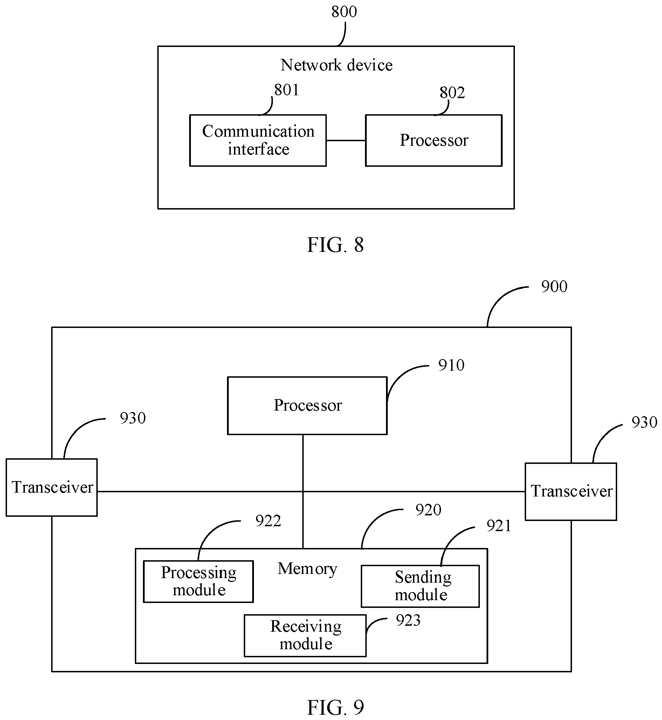

In addition, an embodiment of this application further provides a network device 800. FIG. 8 is a diagram of a structure of the network device 800 according to this embodiment of this application. The network device 800 includes a communication interface 801 and a processor 802 connected to the communication interface 801. The communication interface is, for example, an apparatus such as a transceiver. The network device 800 may be configured to perform the method 100, the method 200, or the method 300 in the foregoing embodiment. Specifically, the network device 800 may serve as a network device 1 to perform an operation performed by the network device 1 in the method 100, and the network device 800 may serve as a network device 2 to perform an operation performed by the network device 2 in the method 100. The communication interface 801 is configured to perform receiving and sending operations performed by the network device 1 or the network device 2 in the method 100. The processor 802 is configured to perform an operation other than the receiving and sending operations performed by the network device 1 or the network device 2 in the method 100. The network device 800 may serve as a first network device to perform an operation performed by the first network device in the method 200, and the network device 800 may serve as the first network device to perform an operation performed by the first network device in the method 300. The communication interface 801 is configured to perform receiving and sending operations performed by the first network device in the method 200 or the method 300. The processor 802 is configured to perform an operation other than the receiving and sending operations performed by the first network device in the method 200 or the method 300. For example, when the network device 800 serves as the first network device to perform the method 200, the communication interface 801 is configured to receive a route advertisement packet from a second network device, where the route advertisement packet includes a common field and a variable field, the common field carries a common part of N SRv6 SIDs, the variable field carries a variable part of a first SRv6 SID in the N SRv6 SIDs, the N SRv6 SIDs correspond to a first prefix, and N is a positive integer greater than or equal to 2. The processor 802 is configured to obtain the N SRv6 SIDs based on the common part and the variable part of the first SRv6 SID. The processor 802 is further configured to generate a first route, where the first route includes the first prefix and the N SRv6 SIDs.

In addition, an embodiment of this application further provides a network device 900. FIG. 9 is a diagram of a structure of the network device according to this embodiment of this application. As shown in FIG. 9, the network device 900 may include a processor 910, and a memory 920 and a transceiver 930 that are coupled to the processor 910. The transceiver 930 may be, for example, a communication interface, an optical module, or the like. The processor 910 may be a central processing unit (central processing unit, CPU), a network processor (network processor, NP), or a combination of a CPU and an NP. The processor may alternatively be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof. The processor 910 may be one processor, or may include a plurality of processors. The memory 920 may include a volatile memory (volatile memory), for example, a random access memory (random access memory, RAM). The memory may also include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory 920 may further include a combination of the foregoing types of memories. The memory 920 may be one memory or may include a plurality of memories. In an implementation, the memory 920 stores computer-readable instructions, and the computer-readable instructions include a plurality of software modules, for example, a sending module 921, a processing module 922, and a receiving module 923. After executing each software module, the processor 910 may perform a corresponding operation based on an indication of each software module. In this embodiment, an operation performed by a software module is actually an operation performed by the processor 910 based on an indication of the software module. Optionally, the processor 910 may also store program code or instructions for performing the solutions in embodiments of this application. In this case, the processor 910 does not need to read the program code or the instructions from the memory 920.

The network device 900 may be configured to perform the method 100, the method 200, or the method 300 in the foregoing embodiment. Specifically, the network device 900 may serve as a network device 1 to perform an operation performed by the network device 1 in the method 100, and the network device 900 may serve as a network device 2 to perform an operation performed by the network device 2 in the method 100. The network device 900 may serve as a first network device to perform an operation performed by the first network device in the method 200, and the network device 900 may serve as the first network device to perform an operation performed by the first network device in the method 300. For example, when the network device 900 serves as the first network device to perform the method 200, the processor 910 is configured to execute related instructions in the memory 920, so that the network device 900 is configured to: receive a route advertisement packet from a second network device, where the route advertisement packet includes a common field and a variable field, the common field carries a common part of N SRv6 SIDs, the variable field carries a variable part of a first SRv6 SID in the N SRv6 SIDs, the N SRv6 SIDs correspond to a first prefix, and N is a positive integer greater than or equal to 2; obtain the N SRv6 SIDs based on the common part and the variable part of the first SRv6 SID; and generate a first route, where the first route includes the first prefix and the N SRv6 SIDs.

An embodiment of this application further provides a computer-readable storage medium. The computer-readable storage medium stores instructions. When the instructions are run on a processor, some or all operations in any method (for example, the method 100, the method 200, or the method 300) in any one of the foregoing embodiments are performed.

An embodiment of this application further provides a computer program product, including a computer program. When the computer program is run on a processor, some or all operations in any method (for example, the method 100, the method 200, or the method 300) in any one of the foregoing embodiments are performed.

An embodiment of this application further provides a communication system, including a first network device and a second network device. The first network device is a network device corresponding to the structure in FIG. 7, FIG. 8, or FIG. 9, and the second network device is a network device corresponding to the structure in FIG. 7, FIG. 8, or FIG. 9. The communication system is configured to perform some or all operations in any method (for example, the method 100, the method 200, or the method 300) in any one of the foregoing embodiments.

An embodiment of this application further provides another communication system, including at least one memory and at least one processor. The at least one memory stores instructions, and the at least one processor executes the instructions, so that the communication system performs some or all operations in any method (for example, the method 100, the method 200, or the method 300) in any one of the foregoing embodiments.

An embodiment of this application further provides a chip, including an interface circuit and a processor. The interface circuit is connected to the processor, and the processor is configured to enable the chip to perform some or all operations in any method (for example, the method 100, the method 200, or the method 300) in any one of the foregoing embodiments.

An embodiment of this application further provides a chip system, including a processor, where the processor is coupled to a memory, the memory is configured to store a program or instructions, and when the program or the instructions are executed by the processor, the chip system is enabled to perform some or all operations in any method (for example, the method 100, the method 200, or the method 300) in any one of the foregoing embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this embodiment of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this embodiment of this application.

For example, the chip system may be an FPGA, an ASIC, a system on chip (system on chip, SoC), a CPU, an NP, a digital signal processor (digital signal processor, DSP), a microcontroller (micro controller unit, MCU), a programmable controller (programmable logic device, PLD), or another integrated chip.

In the specification, claims, and accompanying drawings of this application, the terms "first", "second", "third", "fourth", and the like (if existent) are intended to distinguish between similar objects but do not necessarily indicate a specific order or sequence. It should be understood that the terms in such a way are interchangeable in proper circumstances, so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical service division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, service units in embodiments of this application may be integrated into one processing unit, each of the units may exist alone physically, or two or more units are integrated into one unit. The integrated unit may be implemented in a form of hardware, or may be implemented in a form of a software service unit.

When the integrated unit is implemented in the form of the software service unit and sold or used as an independent product, the integrated unit may be stored in a computer-readable storage medium. Based on such an understanding, all or some of the technical solutions in this application may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

Persons skilled in the art should be aware that in the foregoing one or more examples, the services described in this application may be implemented by hardware, software, firmware, or any combination thereof. When implemented by software, these services may be stored in a computer-readable medium or transmitted as one or more instructions or code on the computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

In the foregoing specific implementations, the objectives, technical solutions, and the benefits of this application are further described in detail. It should be understood that the foregoing descriptions are merely specific implementations of this application.

The foregoing embodiments are merely used to describe the technical solutions of this application, but not to limit the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A route advertisement method, comprising:
receiving, by a first network device, a route advertisement packet from a second network device, wherein the route advertisement packet comprises a common field and a variable field, the common field carries a common part of N segment routing over internet protocol version 6 SRv6 segment identifiers SIDs, the variable field carries a variable part of a first SRv6 SID in the N SRv6 SIDs, the N SRv6 SIDs correspond to a first prefix, and N is a positive integer greater than or equal to 2;
obtaining, by the first network device, the N SRv6 SIDs based on the common part and the variable part of the first SRv6 SID; and
generating, by the first network device, a first route, wherein the first route comprises the first prefix and the N SRv6 SIDs.

2. The method according to claim 1, wherein the N SRv6 SIDs further correspond to a second prefix, and the method further comprises:
generating, by the first network device, a second route, wherein the second route comprises the second prefix and the N SRv6 SIDs.

3. The method according to claim 1 or 2, wherein the route advertisement packet further comprises N-1 variable fields, the N-1 variable fields respectively carry variable parts of N-1 SRv6 SIDs, the N-1 SRv6 SIDs are SRv6 SIDs other than the first SRv6 SID in the N SRv6 SIDs, and the obtaining, by the first network device, the N SRv6 SIDs based on the common part and the variable part of the first SRv6 SID comprises:
obtaining, by the first network device, the N SRv6 SIDs based on the common part, the variable part of the first SRv6 SID, and the variable parts of the N-1 SRv6 SIDs.

4. The method according to claim 3, wherein the route advertisement packet further comprises an offset value and a length value, the length value indicates a length of each of the variable parts of the N SRv6 SIDs, and the offset value indicates an offset location of each of the variable parts of the N SRv6 SIDs in an SRv6 SID.

5. The method according to claim 1 or 2, wherein the route advertisement packet further comprises indication information, the indication information indicates a quantity of the N SRv6 SIDs, and the obtaining, by the first network device, the N SRv6 SIDs based on the common part and the variable part of the first SRv6 SID comprises:
obtaining, by the first network device, the N SRv6 SIDs based on the common part, the variable part of the first SRv6 SID, and the indication information.

6. The method according to claim 5, wherein the obtaining, by the first network device, the N SRv6 SIDs based on the common part, the variable part of the first SRv6 SID, and the indication information comprises:
obtaining, by the first network device, the first SRv6 SID based on the common part and the variable part of the first SRv6 SID; and
obtaining, by the first network device, N-1 SRv6 SIDs based on the first SRv6 SID and the indication information, wherein the N-1 SRv6 SIDs are SRv6 SIDs other than the first SRv6 SID in the N SRv6 SIDs.

7. The method according to claim 5 or 6, wherein the N SRv6 SIDs are an arithmetic progression.

8. The method according to any one of claims 5 to 7, wherein the route advertisement packet further comprises an offset value and a length value, the length value indicates a length of the variable part of the first SRv6 SID, and the offset value indicates an offset location of the variable part of the first SRv6 SID in the first SRv6 SID.

9. The method according to claim 3 or 4, wherein the route advertisement packet comprises a first network layer reachability information NLRI field, and the first NLRI field comprises the N-1 variable fields.

10. The method according to any one of claims 5 to 8, wherein the route advertisement packet comprises a first attach type length value field, and the first attach type length value field carries the indication information.

11. The method according to claim 4 or 8, wherein the route advertisement packet comprises an SRv6 SID structure type length value field, and the SRv6 SID structure type length value field carries the offset value and the length value.

12. The method according to any one of claims 1 to 11, wherein the route advertisement packet comprises a second NLRI field, and the second NLRI field comprises the variable field.

13. The method according to any one of claims 1 to 12, wherein the route advertisement packet comprises a second attach type length value field, the second attach type length value field comprises N behavior fields, and the N behavior fields respectively carry SRv6 endpoint behavior code values associated with the N SRv6 SIDs.

14. The method according to any one of claims 1 to 13, wherein the route advertisement packet comprises a border gateway protocol BGP update message or a BGP link state protocol advertisement message.

15. The method according to claim 14, wherein the common field is in a prefix SID attribute of the BGP update message.

16. The method according to claim 15, wherein the common field is a SID field of the prefix SID attribute.

17. The method according to any one of claims 1 to 16, wherein the common part comprises a locator part of an SRv6 SID, and each of the variable parts of the N SRv6 SIDs comprises a function part of the SRv6 SID and/or an argument part of the SRv6 SID.

18. The method according to any one of claims 1 to 17, wherein the route advertisement packet is used to advertise at least one of the following routes: an ethernet virtual private network EVPN type 1 route, an EVPN type 2 route, an EVPN type 5 route, and a layer 3 virtual private network route.

19. A route advertisement method, comprising:
obtaining, by a first network device, a route advertisement packet, wherein the route advertisement packet comprises a common field and a variable field, the common field carries a common part of N segment routing over internet protocol version 6 SRv6 segment identifiers SIDs, the variable field carries a variable part of a first SRv6 SID in the N SRv6 SIDs, the N SRv6 SIDs correspond to a first prefix, and N is a positive integer greater than or equal to 2; and
sending, by the first network device, the route advertisement packet to a second network device.

20. The method according to claim 19, wherein the N SRv6 SIDs further correspond to a second prefix.

21. The method according to claim 19 or 20, wherein the route advertisement packet further comprises N-1 variable fields, the N-1 variable fields respectively carry variable parts of N-1 SRv6 SIDs, and the N-1 SRv6 SIDs are SRv6 SIDs other than the first SRv6 SID in the N SRv6 SIDs.

22. The method according to claim 19 or 20, wherein the route advertisement packet further comprises indication information, and the indication information indicates a quantity of the N SRv6 SIDs.

23. The method according to claim 22, wherein the N SRv6 SIDs are an arithmetic progression.

24. The method according to claim 21, wherein the route advertisement packet comprises a first network layer reachability information NLRI field, and the first NLRI field comprises the N-1 variable fields.

25. The method according to claim 22 or 23, wherein the route advertisement packet comprises an attach type length value field, and the attach type length value field carries the indication information.

26. The method according to any one of claims 19 to 25, wherein the route advertisement packet comprises a second NLRI field, and the second NLRI field comprises the variable field.

27. The method according to any one of claims 19 to 26, wherein the route advertisement packet comprises a border gateway protocol BGP update message or a BGP link state protocol advertisement message.

28. The method according to claim 27, wherein the common field is in a prefix SID attribute of the BGP update message.

29. The method according to any one of claims 19 to 28, wherein the common part comprises a locator part of an SRv6 SID, and each of the variable parts of the N SRv6 SIDs comprises a function part of the SRv6 SID and/or an argument part of the SRv6 SID.

30. The method according to any one of claims 19 to 29, wherein the route advertisement packet is used to advertise at least one of the following routes: an ethernet virtual private network EVPN type 1 route, an EVPN type 2 route, an EVPN type 5 route, and a layer 3 virtual private network route.

31. A network device, comprising a transceiver unit and a processing unit, wherein
the transceiver unit is configured to perform a receiving and/or sending related operation performed by the first network device in the method according to any one of claims 1 to 18; and
the processing unit is configured to perform an operation other than receiving and sending performed by the first network device in the method according to any one of claims 1 to 18.

32. A network device, comprising:
a memory, wherein the memory comprises computer-readable instructions; and
a processor connected to the memory, wherein when the computer-readable instructions are executed by the processor, the network device is enabled to perform the method according to any one of claims 1 to 18.

33. A network device, comprising a transceiver unit and a processing unit, wherein
the transceiver unit is configured to perform a receiving and/or sending related operation performed by the first network device in the method according to any one of claims 19 to 30; and
the processing unit is configured to perform an operation other than receiving and sending performed by the first network device in the method according to any one of claims 19 to 30.

34. A network device, comprising:
a memory, wherein the memory comprises computer-readable instructions; and
a processor connected to the memory, wherein when the computer-readable instructions are executed by the processor, the network device is enabled to perform the method according to any one of claims 19 to 30.

35. A communication system, comprising a first network device and a second network device, wherein the first network device is configured to perform the method according to any one of claims 1 to 18, and the second network device is configured to perform the method according to any one of claims 19 to 30.

36. A computer-readable storage medium, wherein the computer-readable storage medium stores instructions, and when the instructions are run on a processor, the method according to any one of claims 1 to 30 is implemented.

37. A computer program product, wherein the computer program product comprises a program, and when the program is run on a processor, the method according to any one of claims 1 to 30 is implemented.

38. A chip, comprising an interface circuit and a processor, wherein the interface circuit is connected to the processor, and the processor is configured to enable the chip to perform the method according to any one of claims 1 to 30.
